# EUROPÄISCHE PATENTSCHRIFT

(11) **EP 0 344 492 B1**
(45) Veröffentlichungstag und Bekanntmachung des Hinweises auf die Patenterteilung: **04.08.1993**
(21) Anmeldenummer: 89108453.5
(22) Anmeldetag: 11.05.1989
(51) Int. Cl.: F24F 12/00

(54) **Lüftungsvorrichtung zum gleichzeitigen Be- und Entlüften von Räumen**
Ventilating device for the simultaneous aeration and dearation of spaces
Dispositif d'aération pour aérer et désaérer simultanément des locaux

(30) Priorität: 30.05.1988 DE 3818289; 18.08.1988 DE 3828011
(43) Veröffentlichungstag der Anmeldung: 06.12.1989
(73) Patentinhaber: SIEGENIA-FRANK KG, 57074 Siegen (DE)
(72) Erfinder: Kucharczyk, Eckhard, D-5901 Wilnsdorf 2 (DE)

(56) Entgegenhaltungen:
- DE-A- 3 111 360
- GB-A- 2 111 670

## Beschreibung

Die Erfindung betrifft eine Lüftungsvorrichtung zum gleichzeitigen Be- und Entlüften von Räumen, insbesondere zur Wärmerückgewinnung aus dem Entlüftungs-Medienstrom, mit einem quaderförmigen Gehäuse, das - beispielsweise rauminnenseitig - an oder in einer Gebäudewand anzuordnen sowie an je einen zur Außenluft führenden Kanal für den Belüftungs- und den Entlüftungs-Medienstrom anschließbar ist, wobei innerhalb des Gehäuses zwei voneinander getrennte Strömungswege ausgebildet sind, die je eine Einlaßöffnung und eine Auslaßöffnung für den Belüftungs- und den Entlüftungs-Strom aufweisen, wobei weiterhin die Enlaßlöffnungen beider Strömungswege in sich gegenüberliegenden Wänden, z.B. in der Frontwand und in der Rückwand, des Gehäuses angeordnet sind, wobei ferner zur zwangsläufigen Medienförderung in beiden Strömungswegen innerhalb des Gehäuses ein Radialgebläse mit einem durch eine radiale Trennwand in zwei unabhängig voneinander fördernde Hälften aufgeteilten Gebläserad vorgesehen ist, das mit je einer Hälfte in beide Strömungswege an einer Stelle hineinragt, die den Einlaßöffnungen zumindest teilweise benachbart ist, und wobei die Einlaßöffnung in der der Raumseite zugewendeten Wand, z.B. der Frontwand, die Abluftöffnung bildet, während die Zuluftöffnung für den Belüftungs-Medienstrom im Abstand von dieser Abluft ebenfalls in einer der Raumseite zugewendeten Wand, beispielsweise der Frontwand, vorgesehen ist.

Lüftungsvorrichtungen dieser Bauart und Wirkungsweise gehören bereits durch DE-A- 30 17 431 und DE-A- 31 11 360 zum Stand der Technik. Auch haben sie sich, insbesondere mit der der DE-A- 31 11 360 entsprechenden Bauart, im praktischen Einsatz bewährt.

Bei den bekannten Lüftungsvorrichtungen wird die hohe Effektivität der Wärmerückgewinnung dadurch erreicht, daß das Radialgebläse aus dem mit seinen beiden Hälften in einer für beide Strömungswege gemeinsamen Kammer gelagerten Gebläserad besteht,
daß die Kammer für beide Strömungswege von einem den Umfang des Gebläserades mit Abstand spiralig umfassenden Einsatzkörper im Gehäuse begrenzt ist,
daß ferner die beiden Strömungswege in einem an die Kammer anschließenden Längenbereich des Gehäuses ausschließlich durch den in Kreuzstrom-Bauart ausgeführten Wärmeübertrager zu einer ungeraden Anzahl von in Durchströmrichtung zickzackförmig aufeinander folgenden Längenabschnitten geformt sind, die jeweils zwischen zwei im rechten Winkel aufeinanderfolgenden, von Lamellen- bzw. Plattenstapel gebildeten Übertragerbereichen einen lamellen-bzw. plattenfreien Bereich aufweisen,
daß dabei der dem Gebläserad benachbarte Lamellen- bzw. Plattenstapel mit einer die Anfangstrennung der beiden Strömwege bewirkenden Scheitelkante auf gleicher Ebene mit der Trennwand des Gebläserades liegt,
daß der die beiden Endkammern gegeneinander abgrenzende Einbaukörper aus einer ebenen Längstrennwand besteht, die auf gleicher Ebene mit einer die Endtrennung der beiden Strömungswege bewirkenden Scheitelkante des vom Radialgebläse entfernten Lamellen- bzw. Plattenstapels liegt,
und daß alle sowohl mit dem Entlüftungs-Medienstrom als auch dem Belüftungs-Medienstrom kontaktierenden Wände der Funktionsteile aus gut wärmeleitendem Schichtwerkstoff bestehen.

Eine Unzulänglichkeit dieser bekannten Lüftungsvorrichtung liegt jedoch noch darin, daß die beiden Medienströme, also einerseits der Belüftungs-Medienstrom und andererseits der Entlüftungs-Medienstrom, über eine relativ lange Wegstrecke an den Kontaktflächen von Wärmeübertragern vorbeigeführt werden müssen, um die angestrebte hohe Effektivität der Wärmerückgewinnung auf rekuperativem Wege zu erhalten.

Hieraus resultiert dann eine verhältnismäßig große Baulänge des die Lüftungsvorrichtung enthaltenden, quaderförmigen Gehäuses, weil nämlich die Einlaßöffnung und die Auslaßöffnung sowohl für den Belüftungs- als auch für den Entlüftungs-Medienstrom einen entsprechend großen Abstand voneinander aufweisen.

Aufgabe der Erfindung ist es, eine der Lüftungsvorrichtung nach DE-A- 31 11 360 zumindest entsprechende Effektivität der Wärmerückgewinnung mit einer wesentlich verminderten Baulänge zu erreichen, ohne daß deren Bautiefe vergrößert werden muß.

Erreicht wird dieses Ziel nach der Erfindung grundsätzlich schon dadurch, daß der Strömungsweg für den Entlüftungs-Medienstrom länger bemessen ist, als der Strömungsweg für den Belüftungs-Medienstrom
und daß dabei im Strömungsweg für den Entlüftungs-Medienstrom an der Austrittsseite des Wärmeübertragers eine Strömungsumlenkung vorgesehen ist, die einen Bogen von mindestens 90° einschließt oder durch die Merkmale des Kennzeichnungsteils des Anspruchs 2
Besonders günstige Ergebnisse wurden dabei mit einer Lüftungsvorrichtung erzielt, bei der der Umlenkbogen einen Winkel zwischen 120° und 180°, z.B. von etwa 150°, einschließt.

Bei einer solchen Lüftungsvorrichtung konnte eine Rückwärmezahl ε zwischen 0,7 und 0,8 erreicht werden, was einem Wirkungsgrad von 70% bis 80% entspricht.

Als wichtig hat es sich dabei erwiesen, daß erfindungsgemäß der Durchströmquerschnitt des Strömungsweges für den Entlüftungs-Medienstrom strömungsabwärts des Wärmeübertragers und der Strömungs-Umlenkung wenigstens bereichsweise kleiner bemessen ist, als der Durchströmquerschnitt des Wärmeübertragers und des dessen Eintrittsseite vorgelagerten Abschnittes des Strömungsweges.

Eine andere, zweckmäßige Weiterbildung wird erfindungsgemäß aber auch darin gesehen, daß die beiden Strömungswege von den Einlaßöffnungen aus bis zum Wärmeübertrager hin in aufsteigender Richtung durch das Gehäuse geführt sind und dabei der Wärmeübertrager in beiden Strömungswegen oberhalb des Radialgebläses angeordnet ist sowie zumindest im Strömungsweg für den Entlüftungs-Luftstrom dessen geodätisch höchste Stelle bildet.

Bewährt hat es sich im Rahmen der Erfindung aber auch, die Durchtrittsfläche der Einlaßöffnung für den Entlüftungs-Medienstrom größer zu bemessen, als die Durchtrittsfläche der Auslaßöffnung für diesen.

Es ist nach einem erfindungsgemäßen Weiterbildungsmerkmal andererseits vorgesehen, daß der Strömungsweg für den Belüftungs-Medienstrom von der Austrittsseite des Wärmeübertragers zur Zuluft- bzw. Auslaßöffnung hin einen Umlenkbogen aufweist, der einen Winkel von weniger als 90°, z.B. zwischen 0° und 60°, einschließt.

In baulicher Hinsicht können im einfachsten Falle die Ebenen der Einlaßöffnungen des Gehäuses zu den Ebenen der Einlaßseiten der Gebläserad-Hälften parallel liegen. Es hat sich jedoch als besonders zweckmäßig erwiesen, wenn die Ebenen der Einlaßseiten der Gebläserad-Hälften zu den Ebenen der Einlaßöffnungen des Gehäuses spitzwinklig geneigt verlaufen, wobei dann die die Gebläserad-Hälften enthaltenden Längenabschnitte der Strömungswege bzw. des diese umschließenden Baukörpers sich jeweils parallel zur Rotationsebene der Gebläserad-Hälfte erstrecken.

Nach einer anderen baulichen Ausgestaltungsmaßnahme der Erfindung befindet sich die Einlaßseite der dem Entlüftungs-Medienstrom zugeordneten Gebläserad-Hälfte im wesentlichen vollständig mit der zugehörigen Einlaßöffnung des Gehäuses in Deckungslage, während die Einlaßseite der dem Belüftungs-Medienstrom zugeordneten Gebläserad-Hälfte nur teilweise von der zugehörigen Einlaßöffnung des Gehäuses überdeckt ist.

Die Einlaßöffnung für den Belüftungs-Medienstrom und die Auslaßöffnung für den Entlüftungs-Medienstrom können nach dem Erfindungsvorschlag in der Rückwand des Gehäuses unmittelbar übereinander liegen und lediglich durch einen Quersteg voneinander getrennt sein, wobei jede dieser Öffnungen gegenüber dem Quersteg vorzugsweise eine Halbkreisfläche bildet und an ein entsprechend längsgeteiltes Kanalrohr, Wandfutter od. dgl. anschließbar ist.

Alle diese Maßnahmen tragen dazu bei, daß der hohe Wärmerückgewinnungseffekt mit einer Lüftungsvorrichtung erzielt werden kann, die innerhalb des Gehäuses mit minimalen Einbaumaßen von beispielsweise 230 x 180 x 130 mm auskommt, und zwar auf der Basis eines Luftwechsels zwischen 30 und 40 m³/h.

Um eine Minderung des Wirkungsgrades der Lüftungsvorrichtung bei der Wärmerückgewinnung zu vermeiden, kann es sich als vorteilhaft erweisen, wenn erfindungsgemäß zumindest zwischen der Einlaßöffnung für den Belüftungs-Medienstrom und der Einlaßseite der zugehörigen Gebläserad-Hälfte ein Filter angeordnet ist.

Auch zwischen der Einlaßöffnung für den Entlüftungs-Luftstrom und der Einlaßseite der zugehörigen Gebläserad-Hälfte sollte jedoch zum gleichen Zweck ebenfalls ein Filter vorgesehen werden.

Beide Filter können dabei von einer Filtermatte gebildet werden, die zwischen drei sich jeweils im Winkel zueinander erstreckenden Gehäusewänden um den das Gebläserad mit seinen beiden Hälften einschließenden Abschnitt des die beiden Strömungswege enthaltenden Baukörpers herumlegbar ist. Eine einfache Handhabung des Filters bei einem in gewissen Zeitabständen notwendig werdenden Austausch bzw. Wechsel ist hierdurch gewährleistet.

Besonders vorteilhaft kann es in diesem Zusammenhang sein, wenn erfindungsgemäß der Aufnahmeraum für die Filtermatte von der Frontwand entlang einer Querwand zur Rückwand des Gehäuses verläuft und dabei mindestens von der Querwand zur Rückwand hin mit bogenförmig gestalteten Führungselementen (Rippen) versehen ist.

Die Einbaulage der Filtermatte läßt sich darüberhinaus durch Klemmflächen fixieren, die zumindest zwischen der Frontwand des Gehäuses und den benachbarten Begrenzungswandungen des die Strömungswege umschließenden Baukörpers ausgebildet sind.

Für die Lüftungsvorrichtung ist auch ein unterschiedlicher Grundaufbau möglich.

So kann bei einer erfindungsgemäßen Ausführungsform die Rückwand des Gehäuses den die Strömungswege begrenzenden Baukörper, das Radialgebläse und den Wärmeübertrager tragen, wobei mit ihr eine aus vier Querwänden und der Frontwand gebildete Abdeckhaube lösbar verbunden werden kann.

Bei einer anderen, besonders vorteilhaften Bauart der Lüftungsvorrichtung können hingegen die Rückwand und die vier Querwände des Gehäuses ein einstückiges Formteil, z.B. aus Kunststoff-Spritzguß, bilden, das durch eine abnehmbare Frontwand verschließbar ist sowie den die Strömungswege bildenden Baukörper, das Radialgebläse und den Wärmeübertrager aufnimmt.

Bevorzugt wird nach der Erfindung ein Wärmeübertrager der Kreuzstrom-Bauart benutzt, der von einem einzelnen Platten- bzw. Lamellenpaket, z.B. aus dünnem Schichtwerkstoff, wie Leichtmetall- oder Kupferblech, gebildet ist. Es hat sich hierbei bewährt, wenn die Platten bzw. Lamellen mit einer Kantenlänge von etwa 70 mm, also einem Diagonalmaß von etwa 100 mm, zum Einsatz gelangen, um bei geringen baulichen Abmessungen den wünschenswert hohen Wirkungsgrad zu erzielen.

Von Vorteil ist es erfindungsgemäß aber auch, daß zwei sich diagonal gegenüberliegende Ecken des Platten- bzw. Lamellenpaketes zwischen zwei Winkelzargen des die beiden Strömungswege eingrenzenden Baukörpers eingespannt, z.B. verrastet, sind, während die beiden anderen, sich ebenfalls diagonal gegenüberliegenden Ecken derselben an Stütz- und/oder Ausrichtanschlägen des Baukörpers bzw. des Gehäuses anliegen. Es wird auf diese Art und Weise ein besonders einfacher Zusammenbau der Lüftungsvorrichtung ermöglicht.

Nach der Erfindung ist es aber weiterhin bedeutsam, daß der die beiden Strömungswege eingrenzende Baukörper an seinem dem Wärmeübertrager abgewendeten Ende mit einer Hohlkammer versehen ist bzw. in Verbindung steht, in der elektrische und/oder elektronische Schalt- und/oder Steuerglieder unterbringbar sind.

Es kann dabei in dieser Hohlkammer mindestens ein elektrischer Hauptschalter sitzen, der mit einem Druckknopf mittelbar oder unmittelbar an einem elastisch verformbar ausgebildeten Teilabschnitts der Frontwand des Gehäuses anliegt und auf diese Art und Weise von außen her bedienbar ist.

Sowohl für Lüftungsvorrichtungen der eingangs spezifizierten Gattung, die zur Wärmerückgewinnung aus dem Entlüftungs-Medienstrom ausgelegt sind, als auch bei Lüftungsvorrichtungen, die lediglich ein gleichzeitiges Be- und Entlüften der Räume ermöglichen, hat es sich erfindungsgemäß für eine günstige Luftführung innerhalb des Raumes als besonders wichtig erwiesen, daß die Frontwand eine Verrippung aufweist, die schräg zu ihren Begrenzungskanten verläuft, und daß dabei diese Verrippung jeweils mindestens im Bereich der Abluftöffnung und der Zuluftöffnung durchbrochen ist.

Sowohl der Belüftungs-Medienstrom als auch der Entlüftungs-Medienstrom bewegt sich nämlich in diesem Falle etwa in Diagonalrichtung zur - im wesentlichen rechteckigen - Umrißform des Gehäuses der Lüftungsvorrichtung, wird also bei üblicher Einbaulage der Lüftungsvorrichtung stumpfwinklig gegen die Raumbegrenzungsflächen gerichtet, so daß sich ein zugfreier Luftverteilungs-Effekt einstellt.

In weiterer Ausgestaltung dieser Lösungsmerkmale der Erfindung weist jede Rippe der Verrippung einen zur Hauptebene der Frontwand parallel liegenden Profilabschnitt, einen zu dieser Hauptebene im wesentlichen normal verlaufenden Profilabschnitt sowie einen gegenüber dieser Hauptebene geneigt verlaufenden Übergangs-Abschnitt auf, wobei die Durchbrechungen sich lediglich in den im wesentlichen normal zur Hauptebene der Frontwand verlaufenden Profilabschnitten befinden.

Auf diese Art und Weise tritt der Belüftungs-Luftstrom aus der Zuluftöffnung des Gehäuses im wesentlichen unter einem spitzen Winkel zu dessen Hauptebene aus, während der Entlüftungs-Medienstrom ebenfalls unter einem spitzen Winkel zur Hauptebene des Gehäuses in die Abluftöffnung eingesaugt wird.

Auch hierdurch werden innerhalb des Raumes günstige Strömungsverhältnisse herbeigeführt, weil auch in sofern die Luftrichtung unter einem stumpfen Winkel zu den bereits erwähnten Raumbegrenzungsflächen verläuft.

Damit sich Belüftungs-Medienstrom und Entlüftungs-Medienstrom nicht gegenseitig beeinträchtigen, ist nach der Erfindung weiterhin vorgesehen, daß die Neigungsrichtung der Übergangs-Profilabschnitte im Bereich der Abluftöffnung spiegelbildlich zu deren Neigungsrichtung im Bereich der Zuluftöffnung vorgesehen ist.

Es ergibt sich hierdurch eine einwandfreie Trennung zwischen den verschiedenen Medienströmen, d.h., es wird einer unerwünschten Vermischung derselben auf einfache Art und Weise entgegengewirkt.

In baulicher Hinsicht hat es sich dabei besonders bewährt, wenn die Übergangs-Profilabschnitte im Bereich der Abluftöffnung eine schräg nach abwärts und vorne gerichtete Lage haben, während sie im Bereich der Zuluftöffnung schräg nach aufwärts und vorne gerichtet sind.

Aus Gründen der Formstabilität empfiehlt es sich, an der Rückseite der Frontwand zumindest im Bereich von Abluftöffnung und Zuluftöffnung Versteifungsstege anzuformen, die sich im wesentlichen quer zum Richtungsverlauf der Verrippung erstrecken und deren Rippen im Bereich der Durchbrechungen untereinander verbinden.

Wenn bei einer Lüftungsvorrichtung das Radialgebläse durch eine elektrische Relaissteuervorrichtung selbsttätig an- und abschaltbar ist, deren Schaltglied aus einer Thermometerfeder und/oder Hygrometerfeder besteht, dann hat es sich als vorteilhaft erwiesen, wenn nach der Erfindung die Thermometerfeder und/oder Hygrometerfeder einen Dauermagneten trägt, dem als Schaltkontakt für die Relaissteuervorrichtung ein Reedkontakt zugeordnet ist.

Da die Funktionsteile eines solchen Reedkontaktes gegen atmosphärische Einflüsse völlig abgeschirmt sind, unterliegen sie keiner Korrosion oder der Ausbildung klebender Schmutzschichten und sie sind daher dauerhaft funktionsfähig und sichern damit die ständig selbsttätige Betriebssteuerung für die Lüftungsvorrichtung.

Bewährt hat es sich erfinderungsgemäß aber auch, daß Radialgebläse mit gegenüber der Horizontalen geneigt angeordneter Drehachse in dem die Strömungswege enthaltenden Baukörper und/oder im Gehäuse zu halten. Ohne daß die Welle des Gebläserades und des Antriebsmotors die Benutzung teurer Wälzlager erforderlich macht, kann auf diese Art und Weise ein vibrationsfreier und damit ruhiger Lauf des Radialgebläses sichergestellt werden.

Wenn bei einer erfindungsgemäßen Lüftungsvorrichtung ein Radialgebläse zum Einsatz gelangt, dessen Gebläserad aus schlecht wärmeleitendem Material, beispielsweise Kunststoff, gefertigt ist, dann ist es empfehlenswert, die im wesentlichen radiale Trennwand zwischen den beiden Gebläserad-Hälften im Bereich zwischen ihrer Lagernabe und dem Schaufelkranz mit Durchbrechungen zu versehen, die mindestens zum größten Teil von einer dünnen Schicht aus gut wärmeleitendem Werkstoff, beispielsweise Metallfolie, überdeckt sind.

Es wird auf diese Art und Weise der wünschenswerte Wärmeübergang zwischen dem Entlüftungs-Medienstrom und dem Belüftungs-Medienstrom bereits im Wirkbereich des Gebläserades eingeleitet und damit optimiert.

Bei geeigneter Ausgestaltung der innerhalb des Gebläserades vorgesehenen Folienabdeckung ist es auch möglich, einen in seiner Größe variierbaren Bypass zwischen dem Entlüftungs-Medienstrom und dem Belüftungs-Medienstrom innerhalb des Radialgebläses zu schaffen, der einen Luftfeuchte-Austausch zuläßt und damit den Wärmeübergangseffekt begünstigt.

Im Gehäuse der Lüftungsvorrichtung läßt sich oberhalb des Wärmerückgewinners im Bedarfsfalle auch noch eine Kammer ausbilden, in der sich der elektrische Hauptanschluß für die Lüftungsvorrichtung befindet und/oder wie sich zur Unterbringung eines elektrischen Haupt-Anschlußkabels größerer Länge nutzen läßt, in der Weise, daß nur die für den jeweiligen Anwendungsfall unbedingt benötigte Kabellänge aus dieser Kammer abgezogen wird.

In der Zeichnung sind Ausführungsbeispiele des Gegenstandes der Erfindung dargestellt. Es zeigt
- Fig. 1: im Längsschnitt entlang der Linie I-I in Fig. 3 eine bevorzugte Bauform einer auch als Wärmerückgewinnungsgerät wirksamen Lüftungsvorrichtung,
- Fig. 2: die Frontansicht der Lüftungsvorrichtung nach Fig. 1 in Pfeilrichtung II,
- Fig. 3: das Gehäuse der Lüftungsvorrichtung nach den Fig. 1 und 2 bei abgenommener Frontplatte sowie ausgebautem Luftführungs- und Wärmerückgewinnungssystem, ebenfalls in Pfeilrichtung II gesehen,
- Fig. 4: eine Ansicht in Pfeilrichtung IV-IV der Fig. 1 gesehen,
- Fig. 5: einen Schnitt entlang der Linie V-V in Fig. 4,
- Fig. 6: eine Ansicht der Lüftungsvorrichtung in Pfeilrichtung VI der Fig. 2 gesehen und
- Fig. 7: eine andere als Wärmerückgewinnungsgerät arbeitende Lüftungsvorrichtung mit einem Zuluft-Strömungsweg und einem Abluft-Strömungsweg, denen zur zwangsweisen mechanischen Luftförderung ein elektrisch antreibbares Radial-Doppelgebläse zugeordnet ist.

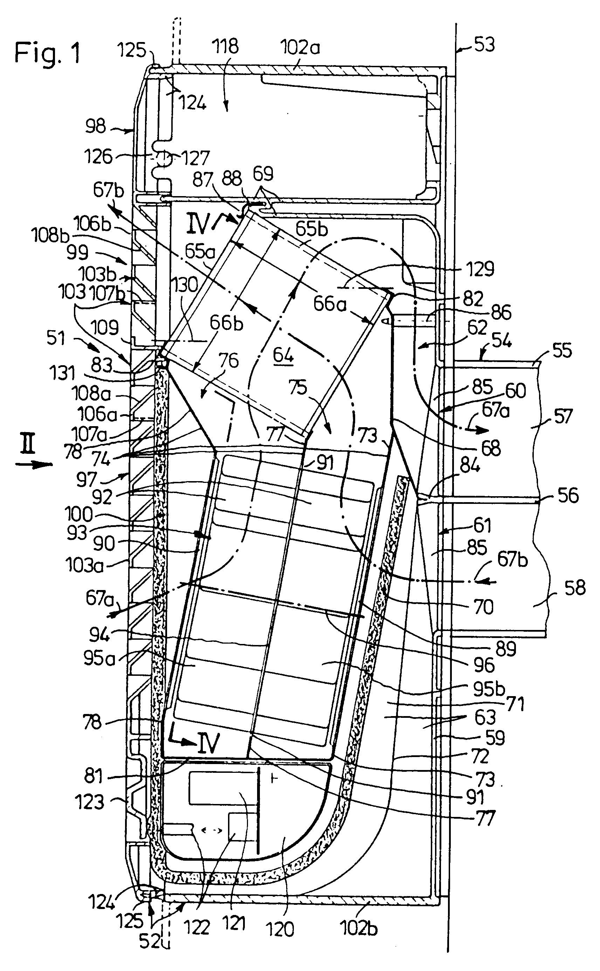

Fig. 1 der Zeichnung zeigt eine Lüftungsvorrichtung 51 zum gleichzeitigen Be- und Entlüften von Räumen, die in einem, beispielsweise quaderförmigen, Gehäuse 52 untergebracht ist.

Diese Lüftungsvorrichtung 51 läßt sich, vorzugsweise rauminnenseitig, an oder in einer Gebäudewand 53 befestigen, die einen Durchbruch 54 nach außen aufweist, in den sich eine rohrförmige Auskleidung 55 einsetzen läßt.

Diese rohrförmige Auskleidung 55 hat dabei eine Trennwand 56, die zwei längsverlaufende Strömungskanäle 57 und 58 von etwa gleichem Querschnitt gegeneinander abgrenzt.

Bevorzugt wird dabei eine rohrförmige Auskleidung 55 von rundem Querschnitt, in der durch die Trennwand 56 die beiden Strömungskanäle 57 und 58 jeweils mit halbkreisförmigem Querschnitt vorgesehen sind.

In der Rückwand 59 des Gehäuses 52 sind zwei Durchlässe 60 und 61 ausgespart, deren Querschnittsform auf die Querschnittsform der Strömungskanäle 57 und 58 abgestimmt ist, so daß diese sich hieran unmittelbar anschließen können.

Der Durchlaß 60 mündet innerhalb des Gehäuses 52 in eine Kammer 62, während der Durchlaß 61, ebenfalls innerhalb des Gehäuses 52, mit einer Kammer 63 in Verbindung steht.

Innerhalb des Gehäuses 52 ist ferner ein Wärmeübertrager 64 untergebracht, der rekuperativ arbeitet und vorzugsweise eine Kreuzstrom-Bauart aufweist. Er besteht aus einem einzelnen Lamellen- bzw. Plattenstapel, der wiederum aus einer größeren Anzahl baulicher Einzellamellen bzw. -platten 65a und 65b zusammengesetzt ist, von denen jede einen etwa C-förmigen Querschnitt aufweisen kann und einen etwa quadratischen Grundriß hat.

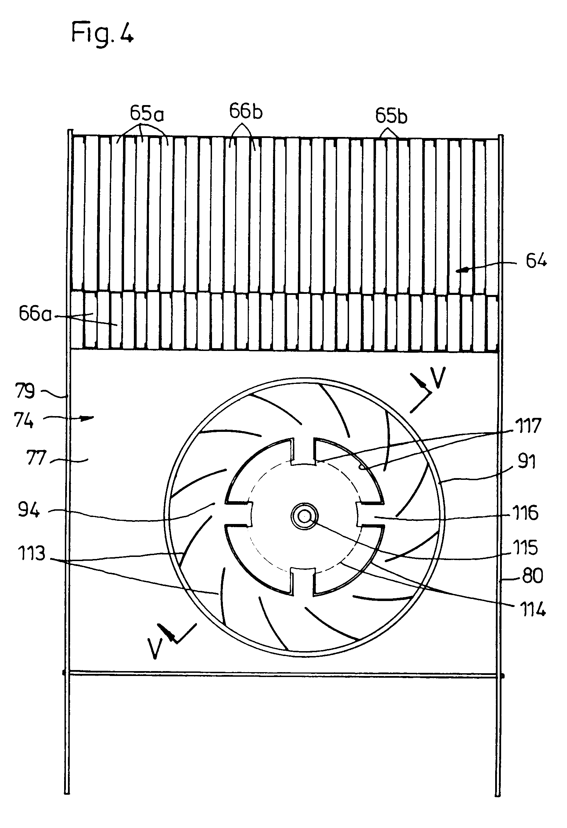

Diese Einzellamellen bzw. -platten 65a bzw. 65b des Wärmeübertragers 64 sind dabei aus verhältnismäßig dünnem, gut wärmeleitendem Werkstoff, beispielsweise Aluminium- oder Kupferfolie, gefertigt, und zur Bildung des Lamellen- bzw. Plattenstapels in gleicher Schichtungslage unmittelbar aufeinandergesetzt, wie das deutlich die Fig. 4 erkennen läßt.

Die Einzellamellen bzw. -platten 65a und 65b sind dabei wechselseitig um eine normal zu ihrer Ebene gerichtete Achse jeweils um 90° gegeneinander verdreht aufeinander gelegt, so daß zwischen ihnen Durchströmkanäle 66a und 66b eingeschlossen werden, die abwechselnd eine zueinander um 90° verdrehte Lage haben, damit die durch sie hindurchgeführten Medienströme 67a und 67b sich in den in Schichtlage aufeinanderfolgenden Durchströmkanälen 66a und 66b jeweils kreuzen.

Die Kammer 62 ist im Gehäuse 52 von der Kammer 63 durch eine relativ dünne Blechwand 68 abgetrennt, welche unter mehrfacher Abwinkelung von einem mit der Trennwand 56 der Auskleidung 55 Deckungslage aufweisenden Ebene innerhalb des Gehäuses 52 bis zu einer Scheitelkante des Wärmeübertragers 64 hochgeführt ist.

Nach oben wird die Kammer 62 im Gehäuse 52 durch eine Abschlußwand 69 begrenzt, die sich ebenfalls an eine andere, höher gelegene Scheitelkante des Wärmeübertragers 64 anschließt und dadurch eine Verbindung der Kammer 62 mit den Durchströmkanälen 66a des Wärmeübertragers 64 herstellt.

In der Kammer 63 ist ein plattenförmiger Filtereinsatz 70 angeordnet, welcher in einem Freiraum 71 innerhalb des Gehäuses 52 liegt, der zur Rückwand 59 des Gehäuses 52 hin durch Querstege 72 und zur anderen Seite hin durch eine Wand 73 eines Luftführungs-Baukörpers 74 begrenzt wird. Der Luftführungs-Baukörper 74 ist in das Gehäuse 52 der Lüftungsvorrichtung 51 eingesetzt und umschließt zwei Kammern 75 und 76, die durch eine Wand 77 gegeneinander abgegrenzt sind. Die Wand 77 erstreckt sich dabei im wesentlichen parallel zur Wand 73 und ebenfalls im wesentlichen parallel zu einer dritten Wand 78 des Luftführungs-Baukörpers 74.

Sämtliche Wände 73, 77 und 78 des Luftführungs-Baukörpers 74 sind, ebenso wie dessen aus Fig. 4 ersichtlichen Querwände 79 und 80 von dünnen Schichtkörpern aus gut wärmeleitendem Werkstoff, beispielsweise aus Blech, gebildet. wobei der Luftführungs-Baukörper 74 insgesamt in das Gehäuse 52 eingesetzt ist.

Nach unten sind die beiden Kammern 75 und 76 des Luftführungs-Baukörpers 74 durch eine Wand 81 begrenzt, die entweder Teil des Luftführungs-Baukörpers 74 ist, oder aber zu einem anderen Einbau 120 im Gehäuse 52 der Lüftungsvorrichtung 51 gehört, welcher später noch beschrieben wird.

Oben schließt sich an den Luftführungs-Baukörper 74 der Wärmeübertrager 64 an, und zwar in der Weise, daß die Kammer 75 mit den von den Einzellamellen 65b eingegrenzten Durchströmkanälen 66b Verbindung hat, während die Kammer 76 an die Durchströmkanäle 66a angeschlossen ist, welche von den Einzellamellen bzw. -Platten 65a eingegrenzt sind.

Der Wärmeübertrager 64 bzw. dessen zu einem einzigen Lamellen- Plattenstapel vereinigten Einzellamellen bzw. -platten 65a und 65b wird bzw. werden an zwei sich diametral gegenüberliegenden Ecken durch Winkelzargen 82 und 83 relativ zueinander ausgerichtet sowie rastend innerhalb des Gehäuses 52 der Lüftungsvorrichtung 51 festgehalten, wie das deutlich in Fig. 1 zu sehen ist. Die Winkelzarge 82 ist dabei einstückig an das obere Ende der Blechwand 68 angeformt, deren abgewinkeltes, unteres Ende in einem Schlitz eines Steges 84 fixiert wird, welcher die beiden Durchlässe 60 und 61 in der Rückwand 59 des Gehäuses 52 gegeneinander abgrenzt und durch eine Vielzahl von Rippen 85 stabilisiert ist, die - gitterartig - über den Öffnungsquerschnitt der Durchlässe 60 und 61 hinwegführen.

In der Nähe der Winkelzarge 82 ist dabei die Blechwand 68 durch stiftartige Stützen 86 gegenüber der Rückwand 59 des Gehäuses 52 abstandsfixiert.

Die Winkelzarge 83 ist an das obere Ende der abgewinkelten Wand 78 des Luftführungs- Baukörpers 74 einstückig angeformt.

Das obere Ende der Wand 77 des Luftführungs-Baukörpers 74 legt sich an die abwärts gerichtete Ecke des Wärmeübertragers 64 bzw. seiner Einzellamellen bzw. Platten 65a und 65b an, während die diagonal dazu angeordnete, obere Ecke desselben Stützanlage an der Wand 69 des Gehäuses 52 hat. Ein im Querschnitt winkelförmiges Sicherungselement 87, beispielsweise in Form einer Schiene, wird in einen Schlitz 88 der Gehäusewand 69 eingeschoben und greift mit seinem nach unten abgewinkelten Abschnitt vor die freie Seite der oberen Ecke des Wärmeübertragers 64, so daß diese auch an der Wand 69 des Gehäuses 52 fixiert ist.

Die Wand 73 des Luftführungs-Baukörpers 74 weist einen kreisförmigen Durchbruch 89 auf und die Wand 78 desselben ist mit einem entsprechenden, kreisförmigen Durchbruch 90 versehen. Die die beiden Kammern 75 und 76 im Luftführungs-Baukörper 74 gegeneinander abgrenzende Trennwand 77 ist darüberhinaus mit einem kreisförmigen Durchbruch 91 versehen. Letzterer ist dabei jedoch in seinem Durchmesser vorzugsweise größer ausgeführt, als die Durchlässe 89 und 90 in den Wänden 73 und 78.

Die Durchlässe 89, 90 und 91 sind in Achsfluchtlage zueinander angeordnet und koaxial zu ihnen ist im Luftführungs-Baukörper 74 das Gebläserad 92 eines elektrisch antreibbaren Radialgebläses 93 gelagert.

Durch eine radiale Trennwand 94 ist dabei dieses Gebläserad 92 in zwei Gebläserad-Hälften 95a und 95b unterteilt

Das Radialgebläse 93 bzw. dessen Gebläserad 92 ist dabei im Luftführungs-Baukörper 74 so aufgenommen, daß seine radiale Trennwand 94 wenigstens annähernd auf gleicher Ebene mit der die beiden Kammern 75 und 76 gegeneinander abgrenzenden Wand 77 liegt. Die Einlaßseite der Gebläserad-Hälfte 95a befindet sich dabei in Parallellage zum Durchlaß 90 in der Wand 78, während die Einlaßseite der Gebläserad-Hälfte 95b in entsprechender Weise Parallellage zum Durchlaß 89 in der Wand 73 des Luftführungs-Baukörpers 74 hat.

Der Luftführungs-Baukörper 74 und das Radialgebläse 93 sind so in das Gehäuse 52 der Lüftungsvorrichtung 51 eingesetzt, daß die Drehachse 96 des Gebläserades 92 und damit auch des als Antrieb dienenden Elektomotors eine gegenüber der Horizontalen geneigte Lage hat.

Es ist auf diese Art und Weise möglich, einen geräuscharmen und vibrationsfreien Lauf des Elektromotors und des Gebläserades 92 auch dann sicherzustellen, wenn dessen Welle nicht in aufwendigen und teuren Wälzlagern läuft, sondern von für Dauerschmierung ausgelegten Gleitlagern gehalten ist.

Die Einlaßseite der Gebläserad-Hälfte 95b kommuniziert über den Durchlaß 89 in der Wand 73 sowie den plattenförmigen Filtereinsatz 70 mit dem in der Rückwand 59 des Gehäuses 52 vorhandenen Durchlaß 61, der wiederum an den Strömungskanal 58 angeschlossen ist. Andererseits steht die Einlaßseite der Gebläserad-Hälfte 95a über den Durchlaß 90 in der Wand 78 mit einer Abluftöffnung 97 in ständiger Verbindung, welche in der der Rückwand 59 gegenüberliegenden Frontwand 98 des Gehäuses 52 ausgebildet ist.

Oberhalb der Abluftöffnung 97 befindet sich in der Frontwand 98 darüberhinaus noch eine Zuluftöffnung 99, an die sich innerhalb des Gehäuses 52 der Wärmeübertrager 64 mit den durch die Einzellamellen bzw. -platten 65b eingegrenzten Durchströmkanälen 66b anschließt.

Zwischen der Abluftöffnung 97, der Frontwand 98 und dem Durchlaß 90 in der Wand 78 des Luftführungs-Baukörpers 74 ist ein plattenförmiger Filtereinsatz 100 vorgesehen.

Die plattenförmigen Filtereinsätze 70 und 100 werden vorzugsweise von einer Matte aus biegsamem Filtermaterial, beispielsweise einem Filtervlies, gebildet, die im einfachsten Falle einstückig hergestellt ist. Sie kann dabei um das untere Ende des Luftführungs-Baukörpers 74 herumgeführt werden, wie das deutlich in Fig. 1 zu sehen ist.

Bei abgenommener Frontwand 98 des Gehäuses 52 läßt sich der den Filtereinsatz 70 bildende Längenabschnitt der Filtermatte entlang den teilweise bogenförmig gekrümmten Stirnkanten der Stützstege 72 einfach und sicher in die Kammer 63 einschieben, bis sie im Freiraum 71 gegen die Blechwand 68 anstößt. Der dabei außerhalb des Gehäuses 52 freibleibende Längenabschnitt der Filtermatte wird sodann an der Öffnungsseite des Gehäuses 52 vor den Luftführungs-Baukörper 74 hochgeklappt, wobei sein oberes Ende in den Bereich der Winkelzarge 83 zu liegen kommt. Wird nunmehr die Frontwand 98 wieder auf das Gehäuse 52 aufgesetzt, dann ist der plattenförmige Filtereinsatz 100 zwischen der Abluftöffnung 97 und dem Durchlaß 90 im Luftführungs-Baukörper 74 lagenfixiert.

Im Bereich der Winkelzarge 83 kann die Wand 78 des Luftführungs-Baukörpers 74 noch vorstehende Dorne oder Zähne 131 tragen, welche in das Material der Filtermatte eindringen und diese zusätzlich festlegen.

Es ist offensichtlich, daß sich die von einer einzigen Filtermatte gebildeten beiden Filtereinsätze 70 und 100 im Bedarfsfalle sehr einfach handhaben lassen, wenn dies für eine Reinigung oder einen Austausch notwendig ist.

Wenn das Radialgebläse 93 in Betrieb geht, dann saugt die Gebläserad-Hälfte 95b des Gebläserades 93 durch den Strömungskanal 58 der rohrförmigen Auskleidung 55 Außenluft an und führt diese entlang dem Strömungsweg 67b nacheinander durch die Kammern 63 und 75 sowie die Durchströmkanäle 66b des Wärmeübertragers 64 zur Zuluftöffnung 99 hin, durch welche sie als Belüftungs-Medienstrom in den Raum gelangt.

Der Strömungsweg für den Belüftungs-Medienstrom 67b verläuft also im wesentlichen in der durch die strichpunktierte Linie angedeuteten, aufsteigenden Richtung vom Durchlaß 61 in der Rückwand 59 des Gehäuses 52 zur Zuluftöffnung 99 in der Frontwand 98 hin. Dabei ist erkennbar, daß die Einlaßseite der den Belüftungs-Medienstrom 67b fördernden Gebläserad-Hälfte 95b nur teilweise, nämlich etwa in ihrer oberen Hälfte vom Durchlaß 61 der Rückwand 59 des Gehäuses 52 überdeckt ist, daß aber der Durchlaß 89 in der Wand 73 des Luftführungs-Baukörpers 74 mit seinem Gesamtquerschnitt unter Zwischenschaltung des Filtereinsatzes 70 mit der dem Durchlaß 61 nachgeschalteten Kammer 63 korrespondiert.

Bei dem aus Fig. 1 ersichtlichen Ausführungsbeispiel der Lüftungsvorrichtung 51 ergibt sich für den Belüftungs-Medienstrom 67b ein Strömungsweg, der von dem die Einlaßöffnung bildenden Durchlaß 61 aus zu der als Auslaßöffnung wirkenden Zuluftöffnung 99 hin zwei Strömungsumlenkungen enthält, deren Umlenkbogen jeweils von 90° abweicht.

Der erste Umlenkbogen führt dabei vom Durchlaß 61 aus durch die Gebläserad-Hälfte 95b in die Kammer 75 des Luftführungs-Baukörpers 74 hinein, während sich der zweite Umlenkbogen - mit entgegengesetzter Krümmungsrichtung - aus der Kammer 75 in den Wärmeübertrager 64 hinein erstreckt. Von der Austrittsseite des Wärmeübertragers 64, deren Unterkante auf dem Niveau 130 liegt, gelangt der Belüftungs-Medienstrom im wesentlichen ohne weitere Umlenkung zur Zuluftöffnung 99 in der Frontwand 98 und von dort aus dann in den Raum.

Der Entlüftungs-Medienstrom 67a wird von der Gebläserad-Hälfte 95a des Gebläserades 92 über den Durchlaß 90 in der Wand 78 des Luftführungs-Baukörpers 74 durch die Abluftöffnung 97 in der Frontwand 98 des Gehäuses 52 angesaugt, und zwar durch die Filtermatte 100. Dabei gelangt der Entlüftungs-Luftstrom 67a zunächst in die die Gebläserad-Hälfte 95a enthaltende Kammer 76 des Luftführungs-Baukörpers 74 und wird von dort in aufsteigender Richtung dem Wärmeübertrager 64 zugeführt. Er gelangt dabei durch die von den Einzellamellen 65a des Lamellen- bzw. Plattenstapels umschlossenen Umströmkanäle 66a, deren Austrittsseite unter einem spitzen Winkel zur Wand 69 des Gehäuses 52 verläuft.

Von der Wand 69 wird dabei der Entlüftungs-Medienstrom 67a zunächst in Richtung zur Rückwand 59 des Gehäuses 52 hin und dann entlang dieser in die von der Blechwand 68 eingegrenzte Kammer 62 umgelenkt, wobei die Kammer 62 wiederum mit dem Durchlaß 60 in der Rückwand 59 des Gehäuses 52 in Strömungsverbindung steht.

Vom Durchlaß 61 gelangt daher der Entlüftungs-Medienstrom 67a in den Strömungskanal 57 der rohrförmigen Auskleidung 55 und wird dann von dort aus durch die Wand 53 nach außen geführt.

Wesentlich ist, daß der Strömungsweg für den Entlüftungs-Medienstrom 67a von der Abluftöffnung 97 aus bis zum Durchlaß 60 hin länger bemessen ist als der Strömungsweg für den Belüftungs-Medienstrom 67b vom Durchlaß 61 aus zur Zuluftöffnung 99 hin.

Dabei ist es darüberhinaus bedeutsam, daß im Strömungsweg für den Entlüftungs-Medienstrom 67a an der Austrittsseite des Wärmeübertragers 64 eine Strömungsumlenkung vorgesehen ist, die ein Bogenmaß - arc α - von mindestens 90° einschließt. Besonders vorteilhaft ist es aber, wenn der Umlenkbogen einen Winkel zwischen 120° und 180°, beispielsweise von 150°, einschließt, wie das die strichpunktierte Linie für den Strömungsweg des Entlüftungs-Medienstromes 67a in Fig. 1 verdeutlicht.

Der Bogen der Strömungsumlenkung aus der Kammer 62 in den Strömungskanal 57 hinein kann sich z.B. über etwa 90° erstrecken.

Der Wärmerückgewinnungseffekt aus dem Entlüftungs-Medienstrom 67a läßt sich auch verbessern, wenn der Durchströmquerschnitt seines Strömungsweges strömungsabwärts des Wärmeübertragers 64 und auch strömungsabwärts der an dessen Austrittsseite anschließenden Strömungsumlenkung wenigestens bereichsweise, z.B. in der Kammer 62, kleiner bemessen ist, als der Durchströmquerschnitt der Durchströmkanäle 66a des Wärmeübertragers 64. Er kann dabei aber auch kleiner sein, als der Durchströmquerschnitt der der Eintrittsseite des Wärmeübertragers 64 vorgelagerten Kammer 76.

Als vorteilhaft für eine günstige Wirkungsweise der Lüftungsvorrichtung 51 erweist es sich auch, wenn die Durchtrittsfläche der Abluftöffnung 97 für den Entlüftungs-Medienstrom 67a größer bemessen ist, als die Durchtrittsfläche des Durchlasses 60 in den Strömungskanal 57.

Alle diese Ausbildungskriterien tragen dazu bei, daß dem Entlüftungs-Medienstrom 67a ein größtmöglicher Anteil von Wärmeenergie entzogen und diese auf den Belüftungs-Medienstrom 67b übertragen wird, bevor dieser durch die Zuluftöffnung 99 in den Raum eintritt.

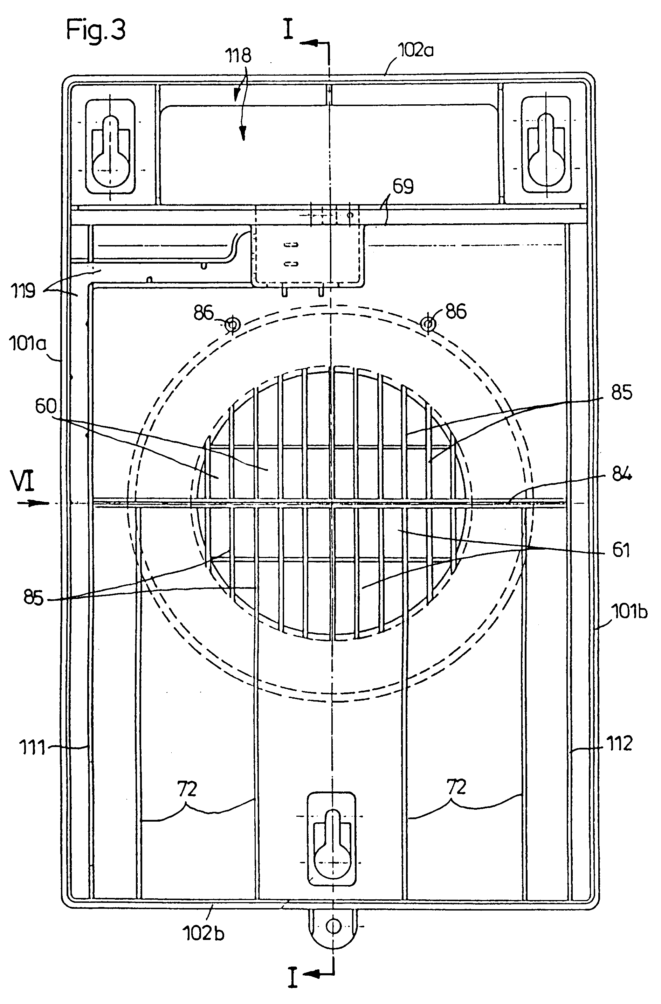

Beim Ausführungsbeispiel nach den Fig. 1 und 3 der Zeichnung sind die Rückwand 59 sowie die vier Querwände 101a, 101b und 102a, 102b des Gehäuses 52 als ein einstückiges Formteil, beispielsweise aus Kunststoff-Spritzguß, ausgeführt und auch die Frontwand 98 wird vorzugsweise von einem solchen, einstückigen Formteil aus Kunststoff-Spritzguß gebildet. Dabei können nicht nur die Rippen 72 und 85, sondern auch der Quersteg 84 und die Distanzstifte 86 unmittelbar einstückig ausgeformt werden, so daß sich insgesamt eine hohe Stabilität für das Gehäuse 52 der Lüftungsvorrichtung 51 einstellt, obwohl dieses nur ein relativ geringes Konstruktionsgewicht aufweist.

Die Rippen 72 sind dabei so gestaltet, daß sie von der Querwand 102b in Richtung zur Rückwand 59 hin bogenförmig gekrümmt verlaufen und dadurch ein ordnungsgemäßes Einschieben des Filtereinsatzes 70 in die Kammer 63 begünstigen, indem sie nämlich zumindest für den Anfangsabschnitt des Filtereinsatzes 70 als eine Umlenkführung in der Kammer 63 wirksam werden.

Es sei hier noch erwähnt, daß der Wärmeübertrager 64 innerhalb des Gehäuses 52 der Lüftungsvorrichtung 51 sowohl im Entlüftungs-Medienstrom 67a als auch im Belüftungs-Medienstrom 67b jeweils oberhalb des Radialgebläses 93 angeordnet ist und daß dabei zumindest im Strömungsweg für den Entlüftungs-Luftstrom 67a der Wärmeübertrager 64 mit seiner Austrittsseite auf dem Niveau 129 etwa dessen geodätisch höchste Stelle bildet, an die sich in Abwärtsrichtung erst die Kammer 62 anschließt, die zum Durchlaß 60 Verbindung hat.

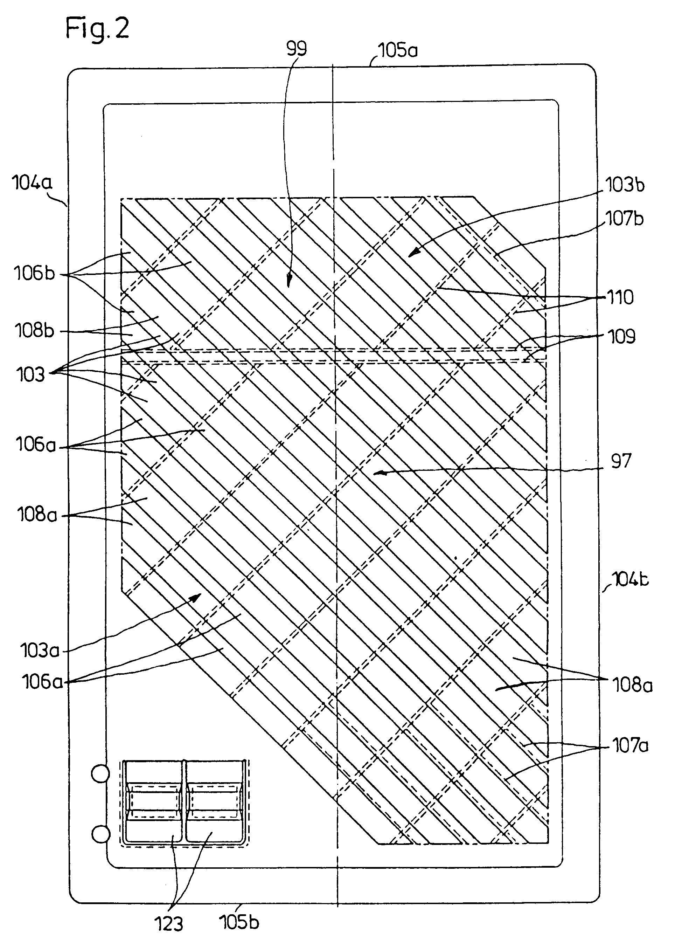

Besonders aus den Fig. 1 und 2 der Zeichnung ergibt sich, daß die Frontwand 98 des Gehäuses 52 mit einer Verrippung 103 versehen ist, die schräg zu ihren Umfangs-Begrenzungskanten 104a, 104b und 105a, 105b verläuft. Dabei macht Fig. 1 deutlich, daß die Profilierung der Rippen 103a im Bereich der Abluftöffnung 97 einen anderen Richtungsverlauf hat, als diejenige der Rippen 103b im Bereich der Zuluftöffnung 99.

Jede Rippe 103a und 103b weist dabei einen zur Hauptebene der Frontwand 98 parallel liegenden Profilabschnitt 106a bzw. 106b, einen hierzu im wesentlichen normal verlaufenden Profilabschnitt 107a bzw. 107b sowie einen gegenüber dieser Hauptebene geneigt verlaufenden Übergangs-Profilabschnitt 108a bzw. 108b auf.

Während die Verrippung 103 bzw. deren unterschiedlich ausgerichteten Rippen 103a und 103b sich gemäß Fig. 2 so entlang der Stirnfläche der Frontwand 98 erstrecken, daß deren zur Hauptebene parallel liegende Profilabschnitte 106a und 106b sich ohne Unterbrechung geradlinig aneinanderschließen, haben die gegenüber dieser Hauptebene geneigt verlaufenden Übergangs-Abschnitte 108a eine Neigungsrichtung, die zur Neigungsrichtung der ÜbergangsProfilabschnitte 108b entgegengesetzt verläuft, wie das deutlich aus Fig. 1 ersichtlich ist.

Der Wechsel der Neigungsrichtung für die Übergangs-Profilabschnitte 108a und 108b wird dabei von einer Rippe 109 bestimmt, welche den Bereich der Abluftöffnung 97 gegen den Bereich der Zuluftöffnung 99 in einer zu den Begrenzungskanten 105a und 105b parallel verlaufenden Richtung abgrenzt.

Die die eigentliche Abluftöffnung 97 und die eigentliche Zuluftöffnung 99 bildenden Durchbrechungen der Verrippung 103 bzw. der Rippen 103a und 103b werden dadurch geschaffen, daß dort die normal zur Hauptebene der Frontwand 98 verlaufenden Profilabschnitte 107a und 107b nur jeweils über einen Teilabschnitt der Rippen 103a und 103b ausgeformt sind, wie das durch die gestrichelten Linien in Fig. 2 angedeutet ist.

Die Öffnungsspalte zwischen den einzelnen Rippen 103a im Bereich der Abluftöffnung 97 haben dabei eine schräg nach abwärts und nach vorne gerichtete Lage, während die Öffnungsspalte im Bereich der Zuluftöffnung 99 mit einer entsprechend schräg nach aufwärts und vorne gerichteten Lage vorgesehen sind.

Durch Versteifungsrippen 110, welche an die Rückseite der Frontwand 98 angeformt sind, und die sich im wesentlichen quer zum Richtungsverlauf der Verrippung 103 erstrecken, wird die Frontwand 98 insgesamt, besonders aber im Bereich der weggelassenen Profilabschnitte 107a und 107b wirksam stabilisiert.

Wenn man einerseits die Fig. 3 und andererseits die Fig. 4 der Zeichnung betrachtet, dann wird deutlich, daß der Luftführungs-Baukörper 74 sich mit Hilfe seiner beiden Querwände 79 und 80 auf einfache Art und Weise exakt zwischen den Stegen 111 und 112 ausrichten läßt, die einstückig an die Innenfläche der Rückwand 59 in einer zu den Rippen 72 parallelen Erstreckung angeformt sind. Während sich aber die Rippen 72 nur von der unteren Gehäusequerwand 102 bis zum Steg 84 hin erstrecken, sind die Stege 111 und 112 nach oben über den Steg 84 hinausgeführt, und zwar durchgehend bis zur Wand 69 hin.

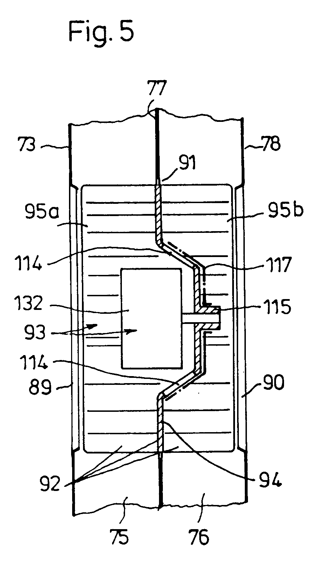

Den Fig. 4 und 5 der Zeichnung kann auch noch eine besondere Ausbildungsmöglichkeit für das Gebläserad 92 des Radialgebläses 93 entnommen werden. Diese ist besonders dann empfehlenswert, wenn das Gebläserad 92 insgesamt, also mit seinen beiden Gebläserad-Hälften 95a und 95b, der radialen Trennwand 94 und der Beschaufelung 113, als einstückiges Formteil aus schlecht wärmeleitendem Material, beispielsweise Kunststoff, hergestellt ist.

Insbesondere in einem solchen Falle wird nämlich die radiale Trennwand 94 mit in Umfangsrichtung gleichmäßig verteilt angeordneten Durchbrüchen 114 im Bereich zwischen der Beschaufelung 113 und der Nabe 115 versehen, die jeweils durch einen Radialsteg 116 gegeneinander abgegrenzt sind.

Den, beispielsweise ringsegmentförmig verlaufenden, Durchbrüchen 114 ist dann ein Schichtkörper 117 aus gut wärmeleitendem Werkstoff, beispielsweise dünner Metallfolie, zugeordnet, mit dem sowohl der Entlüftungs-Medienstrom 67a als auch der Belüftungs-Medienstrom 67b zumindest im Bereich der Durchbrüche 114 kontaktieren kann. Schon dort stellt sich dann ein Wärmefluß vom Entlüftungs-Medienstrom 67a zum Belüftungs-Medienstrom 67b ein.

Wenn dann zusätzlich der Schichtkörper 117 in begrenztem Umfang axial verschieblich auf der Nabe 115 festgeklemmt ist, kann zwischen diesem und der radialen Trennwand 94 auch ein Spaltabstand eingestellt werden (siehe Fig. 5) der einen Bypass zwischen beiden Medienströmen schafft, durch den auch ein Luftfeuchte-Austausch ermöglicht wird.

Es läßt sich hierdurch die Effektivität der Wärmerückgewinnung weiter verbessern.

Der Elektromotor 129 des Radialgebläses 93 sollte - gemäß Fig. 5 - vorzugsweise so eingebaut werden, daß er dem Belüftungs-Medienstrom 67b ausgesetzt ist, so daß seine Verlustwärme von diesem Belüftungs-Medienstrom 67b aufgenommen werden kann.

Oberhalb der Wand 69 kann das Gehäuse 52 noch einen Hohlraum 118 einschließen, der einerseits zur Rückwand 59 mindestens teilweise offen, andererseits jedoch zur Raumseite hin mittels der Frontwand 98 abschließbar ist (Fig. 1). Dieser Hohlraum 118 ist dabei geeignet einen größeren Längenabschnitt eines Hauptanschlußkabels aufzunehmen, das dort ggf. auch mit einer Hauptanschlußklemme für die Lüftungsvorrichtung 51 verbindbar ist. Von diesem Hohlraum 118 aus lassen sich Verbindungsleitungen durch ein an der Innenseite der Rückwand 59 einerseits längs der Wand 69 sowie andererseits zwischen der Querwand 101b und dem Steg 112 verlaufenden Rinnensystem 119 zum unteren Ende des Gehäuses 52 führen. Dort kann sich unmittelbar unterhalb des Luftführungs-Baukörpers 74 eine Hohlkammer 120 befinden, in welcher sich wiederum elektrische und/oder elektronische Schalt- und/oder Steuerelemente 121, 122 unterbringen lassen. Diese Hohlkammer 120 läßt sich im einfachsten Falle unmittelbar zwischen die Querwände 79 und 80 des Luftführungs-Baukörpers 74 einsetzen.

Zumindest das Schaltelement 122 kann dabei ein Ein- und Ausschalter sein, über den die elektrische Netzverbindung wahlweise herzustellen oder zu unterbrechen ist.

Der Ein- und Ausschalter 122 ist dabei so hinter einem elastisch verformbaren, beispielsweise zungenartig gestalteten Profilabschnitt 123 der Frontwand 98 gelegen, daß er sich mit dessen Hilfe problemlos betätigen läßt. Der Druckknopf des Ein- und Ausschalters 122 läßt sich hier ohne weiteres auch unter Zwischenschaltung eines Teilstücks der Filtermatte 100 mittels des zungenförmigen Teils 123 bedienen.

In der Hohlkammer 120 kann auch noch eine elektrische Steuervorrichtung für das Radialgebläse 93 untergebracht werden, die durch einen Thermoschalter und/oder Hygroschalter beeinflußbar ist, um ein selbsttätiges An- und Abschalten des Gebläses 93 zu ermöglichen.

Der Thermoschalter läßt sich dabei durch eine Thermometerfeder und der Hygroschalter in entsprechender Weise durch eine Hygrometerfeder betätigen.

Sowohl die Thermometerfeder als auch die Hygrometerfeder kann die Form einer Spirale haben, die mit ihrem inneren Ende an einer Halteachse fixiert ist und deren äußeres Ende - in Abhängigkeit von der Temperatur bzw. der Luftfeuchte - einen voreinstellbaren Schaltweg durchläuft und dabei zugeordnete Kontakte selbsttätig beeinflußt.

Ist die Schaltkraft der Spirale genügend groß, dann kann diese unmittelbar zur Betätigung eines Microschalters benutzt werden, welcher die Energiezufuhr zum Antriebsmotor des Radialgebläses 93 herstellt und auch unterbricht.

Thermometerfeder und/oder Hygrometerfeder können aber auch mit einer elektrischen Relaissteuervorrichtung für das Radialgebläse 93 zusammenarbeiten, beispielsweise dadurch, daß sie jeweils einen Dauermagneten tragen, dem als Schaltkontakt für die Relaissteuervorrichtung ein sogenannter Reedkontakt zugeordnet ist.

Eine optimale Wirkungsweise der selbsttätigen Steuervorrichtung für das Radialgebläse 93 wird dann erreicht, wenn die als Schaltglied dienende Hygrometerfeder vom Entlüftungs-Medienstrom 67a, somit also von Luft aus der Kammer 76 des Luftführungs-Baukörpers 74 beeinflußt wird, während die Thermometerfeder dem Belüftungs-Medienstrom 67b ausgesetzt ist, also mit Luft aus der Kammer 75 des Luftführungs-Baukörpers 74 korrespondiert.

Bei der Lüftungsvorrichtung 51 nach Fig. 1 greift die Frontwand 98 mit einem angeformten Umfangsrand 124 zentrierend in den Bereich der Randkanten der Querwände 101a, 101b und 102a, 102b ein, wie das oben in Fig. 1 deutlich zu sehen ist.

Ein Kragen 125 umfaßt andererseits auch die Außenflächen dieser Querwände 101a, 101b und 102a, 102b, wie das ebenfalls aus Fig. 1 ersichtlich ist.

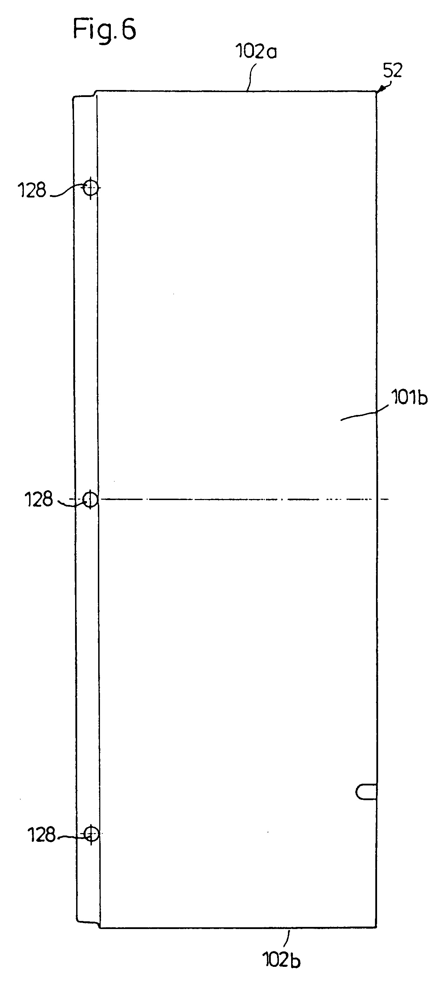

Festgelegt wird die Frontwand 98 relativ zu den Querwänden 101a, 101b und 102a, 102b des Gehäuses 52 durch Rastzungen 126 (Fig.1) die jeweils mit einer Warze oder Noppe 127 in passende Löcher 128 einrücken, welche sich gemäß Fig. 6 zumindest in den aufrechten Querwänden 101a und 101b befinden.

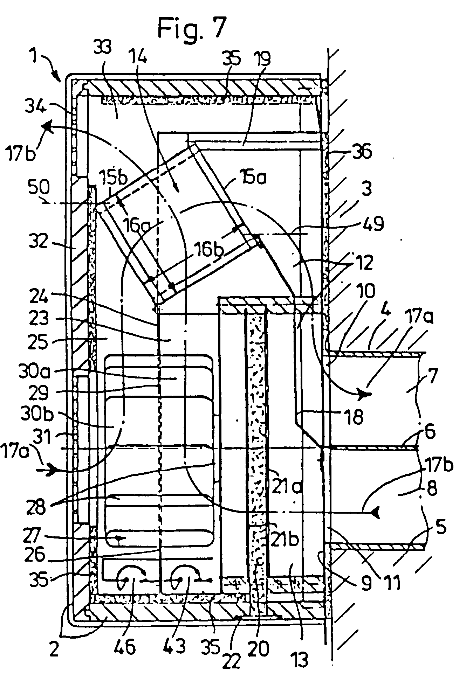

Eine ihrer Bauart nach vom Ausführungsbeispiel nach den Fig. 1 bis 6 abweichende Lüftungsvorrichtung 1 mit Wärmerückgewinnung ist noch in Fig. 7 der Zeichnung gezeigt. Diese weist jedoch nicht ganz die der Bauart nach den Fig. 1 bis 6 eigentümliche, besonders hohe Effektivität bezüglich der erzielbaren Wärmerückgewinnung auf.

Für viele Einsatzzwecke ist jedoch die Lüftungsvorrichtung 1 nach Fig. 7 ohne weiteres einsatzfähig.

Fig. 7 der Zeichnung zeigt eine Lüftungsvorrichtung 1 zum gleichzeitigen Be- und Entlüften von Räumen, die in einem beispielsweise quaderförmigen Gehäuse 2 untergebracht ist.

Auch diese Lüftungsvorrichtung 1 wird beispielsweise rauminnenseitig an oder in einer Gebäudewand 3 angeordnet, die einen Durchbruch 4 nach außen aufweist, in den sich eine rohrförmige Auskleidung 5 einsetzen läßt. Die rohrförmige Auskleidung 5 hat dabei eine Trennwand 6, die innerhalb der Auskleidung 5 zwei Strömungskanäle 7 und 8 von etwa gleichem Querschnitt gegeneinander abgrenzt.

In der Rückwand 9 des Gehäuses 2, sind zwei Durchlässe 10 und 11 ausgespart, deren Querschnittsform jeweils auf die Strömungskanäle 7 und 8 abgestimmt ist und die sich an diese Strömungskanäle 7 und 8 anschließen.

Der Durchlaß 10 mündet innerhalb des Gehäuses 2 in eine Kammer 12, während der Durchlaß 11, ebenfalls innerhalb des Gehäuses 2 mit einer Kammer 13 verbunden ist.

Innerhalb des Gehäuses 2 ist ferner ein Wärmeübertrager 14 untergebracht, der rekuperativ arbeitet und beispielsweise eine Kreuzstrom-Bauart aufweist. Er besteht aus mindestens einem Lamellen- bzw. Plattenstapel, der aus einer größeren Anzahl von Einzellamellen bzw. -platten 15a und 15b zusammengesetzt ist, von denen jede einen etwa C-förmigen Querschnitt aufweisen kann und einen etwa quadratischen Grundriß hat. Diese Einzellamellen bzw. -platten 15a und 15b des Wärmeübertragers 14 sind dabei aus verhältnismäßig dünnem, gut wärmeleitendem Werkstoff, beispielsweise Aluminium- oder Kupferfolie, gefertigt und zur Bildung des Lamellen- bzw. Plattenstapels in gleicher Schichtungslage unmittelbar aufeinandergesetzt.

Die Einzellamellen bzw. -platten 15a und 15b sind wechselseitig um eine normal zu ihrer Ebene gerichtete Achse jeweils um 90° gegeneinander verdreht aufeinandergelegt, so daß zwischen ihnen Durchströmkanäle 16a und 16b eingeschlossen werden, die abwechselnd eine zueinander um 90° verdrehte Lage haben, damit die durch sie hindurchgeführten Luftströme 17a und 17b sich in den in Schichtlage aufeinanderfolgenden Strömungskanälen jeweils kreuzen.

Die Kammer 12 ist im Gehäuse 2 von der Kammer 13 durch eine relativ dünne Blechwand 18 abgetennt, welche unter mehrfacher Abwinklung von einer mit der Trennwand 6 der Auskleidung 5 Deckungslage auf weisenden Ebene innerhalb des Gehäuses 2 bis zu einer Scheitelkante des Wärmeübertragers 14 hochgeführt ist.

Nach oben wird die Kammer 12 im Gehäuse 2 durch eine Abschlußwand 19 begrenzt, die sich ebenfalls an eine Scheitelkante des Wärmeübertragers 14 anschließt und dadurch eine Verbindung der Kammer 12 mit den Durchströmkanälen 16a des Wärmeübertragers 14 herstellt.

An die Kammer 13 schließt sich ein plattenförmiger Filtereinsatz 20 an, der zwischen zwei Gruppen von stabförmigen Haltegliedern 21a und 21b ausgerichtet gehalten wird und im Bedarfsfalle durch eine Wandöffnung 22 des Gehäuses 2 aus- und eingebaut werden kann.

An den Filter 20 schließt sich innerhalb des Gehäuses eine Kammer 23 an, die wiederum durch eine von einem dünnen Schichtkörper, beispielsweise Blech, gebildete Wand 24 gegen eine Kammer 25 abgegrenzt ist.

Die Schichtkörper-Wand 24 ist dabei mit einem kreisförmigen Durchbruch 26 versehen, der axial von einem Gebläserad 27 eines elektrisch antreibbaren Radialgebläses 28 durchsetzt wird. Das Gebläserad 27 weist dabei eine radiale Trennwand 29 auf, die etwa in gleicher Ebene mit der Schichtkörper-Wand 24 liegt und damit das Gebläserad 27 in zwei etwa gleiche Hälften 30a und 30b unterteilt. Die Hälfte 30a desselben rotiert dabei innerhalb der Kammer 23, während seine Hälfte 30b in der Kammer 25 umläuft.

Das Gebläserad 27 des Radialgebläses 28 ist in Fluchtlage mit einer beispielsweise loch- bzw. schlitzgitterartig gestalteten Ansaugöffnung 31 in der raumseitigen Frontwand 32 des Gehäuses 2 angeordnet. Die Hälfte 30b des Gebläserades 27 saugt dabei Abluft aus dem Rauminneren in die Kammer 25, welche wiederum mit Durchströmkanälen 16a des Wärmeübertragers 14 in Dauerverbindung steht. Die in der Abluft, also im Entlüftungs-Medienstrom 17a, enthaltene Wärmeenergie wird dabei zum größten Teil vom Wärmeübertrager 14 aufgenommen, bevor diese Abluft durch die Kammer 12, den Durchlaß 10 und den Strömungskanal 7 als Fortluft nach außen gelangt.

Außenluft wird durch den Strömungskanal 8 der Auskleidung 5, die Kammer 13 und den Filter 20 von der Hälfte 30a des Gebläserades 27 in die Kammer 23 als Belüftungs-Medienstrom 17b eingesaugt und von dort aus in die Durchströmkanäle 16b des Wärmeübertragers 14 transportiert. Dabei geht die vom Wärmeübertrager 14 aus dem Medienstrom 17a aufgenommene Transmisionswärme auf den Medienstrom 17b über, bevor dieser dann durch die Kammer 33 und die Austrittsöffnung 34 in der Frontwand 32 des Gehäuses 2 als Zuluft in den Raum gefördert wird.

Auch die Austrittsöffnung 34 in der Frontwand 32 des Gehäuses 2 kann in ähnlicher Weise wie die Ansaugöffnung 31 mit einem Loch- bzw. Schlitzgitter ausgestattet sein.

Damit die Lüftungsvorrichtung 1 auch eine schalldämmende Wirkung erreicht, ist es zweckmäßig, die Innenflächen des Gehäuses 2 mit Schallschluckwerkstoff 35, beispielsweise Schaumkunststoff, zu belegen, sowie auch zwischen Rückwand 9 des Gehäuses 2 und die Gebäudewand 3 eine Dämmschicht 36 einzubringen.

Als besonders vorteilhaft erweist sich für die selbsttätige Betriebssteuerung der Lüftungsvorrichtung 1 nach Fig. 7 eine elektrische Relaissteuervorrichtung mit zwei in Reihe liegenden Schaltkontakten 43 und 46, von denen der Schaltkontakt 43 als Schaltglied eine Thermometerfeder und der Schaltkontakt 46 als Schaltglied eine Hygrometerfeder aufweist. Wird in diesem Falle der Schaltkontakt 43 der Kammer 23 und der Schaltkontakt 46 der Kammer 25 der Lüftungsvorrichtung 1 nach Fig. 7 zugeordnet, wie dies dort schematisch vereinfacht dargestellt ist, dann geht das Radialgebläse 28 der Lüftungsvorrichtung 1 nur in Betrieb, sofern und solange sowohl die an der Thermometerfeder des Schaltkontaktes 43 einjustierten Temperaturparameter als auch die an der Hygrometerfeder des Schaltkontaktes 46 einjustierten Luftfeuchteparameter vorliegen.

Ist beispielsweise die Thermometerfeder des Schaltkontaktes 43 so eingestellt, daß dieser bei einer Außenluft-Temperatur schließt deren obere Grenze bei etwa 15° C liegt, und hat die Hygrometerfeder des Schaltkontaktes 46 eine Einstellung, nach der dieser erst bei Überschreiten einer relativen Raumluftfeuchte von 50% in die Schließlage gelangt, dann geht das Radialgebläse 28 nur bei gleichzeitigem Vorliegen beider Parameter tatsächlich in Betrieb.

Während beim Ausführungsbeispiel nach Fig. 1 das Niveau 129 der Austrittsseite des Wärmeübertragers 64 für den Entlüftungs-Medienstrom 67a geodatisch höher gelegen ist, als das Niveau 130 der Austrittsseite desselben für den Belüftungs-Medienstrom 67b, ist dies beim Ausführungsbeispiel nach Fig. 7 umgekehrt. Dort liegt nämlich das Niveau 50 der Austrittsseite des Wärmeübertragers 14 für den Belüftungs-Medienstrom 17b oberhalb des Niveaus 49 der Austrittsseite des Wärmeübertragers 14 für den Entlüftungs-Medienstrom 17a.

## Patentansprüche

1. Lüftungsvorrichtung (51) zum gleichzeitigen Be- und Entlüften von Räumen, und zur Wärmerückgewinnung aus dem Entlüftungs-Medienstrom (67a), mit einem quaderförmigen Gehäuse (52), das - beispielsweise rauminnenseitig - an oder in einer Gebäudewand (53) anzuordnen sowie an je einen zur Außenluft führenden Kanal (57, 58) für den Be- und Entlüftungs-Medienstrom (67b bzw. 67a) anschließbar ist, wobei innerhalb des Gehäuses (52) zwei voneinander getrennte Strömungswege ausgebildet sind, die je eine Einlaßöffnung (61 bzw. 97) und eine Auslaßöffnung (60 bzw. 99) sowie zwischen diesen einen Wärmeübertrager (64) für den Belüftungs- und den Entlüftungs - Medienstrom (67b bzw 67a) aufweisen, wobei weiterhin die Einlaßöffnungen (61 bzw. 97) beider Strömungswege in sich gegenüberliegenden Wänden (98 und 59), z. B. in der Frontwand (98) und in der Rückwand (59), des Gehäuses (52) angeordnet sind, wobei ferner zur zwangsläufigen Medienförderung in beiden Strömungswegen innerhalb des Gehäuses (52) ein Radialgebläse (93) mit einem durch eine radiale Trennwand (94) in zwei unabhängig voneinander fördernde Hälften (95a bzw. 95b) aufgeteilten Gebläserad (92) vorgesehen ist, daß mit je einer Hälfte (95a bzw 95b) in beide Strömungswege an einer Stelle hineinragt, die den Einlaßöffnungen (61 bzw. 97) zumindest teilweise benachbart ist, und wobei die Einlaßöffnung (97) in einer der Raumseite zugewendeten Wand (98), z.B. der Frontwand (98), die Abluftöffnung bildet, während die Zuluftöffnung (99) für den Belüftungs-Medienstrom (67b) im Abstand von dieser Abluftöffnung ebenfalls in einer der Raumseite zugewendeten Wand (98), beispielsweise der Frontwand (98), vorgesehen ist,
dadurch gekennzeichnet,
daß der Strömungsweg für den Entlüftungs-Medienstrom (67a) länger bemessen ist , als der Strömungsweg für den Belüftungs-Medienstrom (67b)
und daß dabei im Strömungsweg für den Entlüftungs-Medienstrom (67a) an der Austrittsseite des Wärmeübertragers (64) eine Strömungsumlenkung (69, 62) vorgesehen ist, die einen Bogen von mindestens 90° einschließt.

2. Lüftungsvorrichtung (1) zum gleichzeitigen Be- und Entlüften von Räumen und zur Warmerückgewinnung aus dem Entlüftungs-Luftstrom (17a), mit einem quaderförmigen Gehäuse (2), das - beispielweise rauminnenseitig - an oder in einer Gebäudewand (3) angeordnet sowie an je einen zur Außenluft führenden Kanal (8 bzw. 7) für den Belüftungs- und den Entlüftungs-Luftstrom (17b bzw. 17a) anschließbar ist, wobei innerhalb des Gehäuses (2) zwei voneinander getrennte Strömungswege ausgebildet sind, die je eine Einlaßöffnung (11 bzw. 31) und eine Auslaßöffnung (10 bzw. 34) sowie zwischen diesen einen Wärmeübertrager(14) für den Belüftungs- und den Entlüftungs-Luftstrom (17b und 17a) aufweisen, wobei weiterhin die Einlaßöffnungen (11 und 31) beider Strömungswege in der Frontwand (32) und in der Rückwand (9) des Gehäuses (2) angeordnet sind, wobei ferner zur zwangsläufigen Luftförderung in beiden Strömungswegen innerhalb des Gehäuses (2) ein Radialgebläse (28) mit einem durch eine radiale Trennwand (24) in zwei unabhängig voneinander fördernde Hälften (30a bzw. 30b) aufgeteilten Gebläserad (27) vorgesehen ist, das mit je einer Hälfte (30a bzw. 30b) in beide Strömungswege an einer Stelle hineinragt, die den Einlaßöffnungen (11 und 31) zumindest teilweise benachbart ist, und wobei die Einlaßöffnung (31) in der der Raumseite zugewendeten Frontwand (32) die Abluftöffnung bildet, während die Zuluftöffnung für den Belüftungs-Luftstrom (17b) im Abstand von dieser Abluftöffnung ebenfalls in der der Raumseite zugewendeten Frontwand (32) vorgesehen ist,
dadurch gekennzeichnet,
daß im Gehäuse (2) dem Kanal (8) für den Belüftungs-Luftstrom (17b) eine Einlaß-Kammer (13) und dem Kanal (7) für den Entlüftungs-Luftstrom (17a) eine Auslaßkammer (12) zugeordnet ist,
daß die Kammern (12 und 13) durch eine dünne Blechwand (18) voneinander getrennt sind, welche von einer den Kanal (8) für den Belüftung-Luftstrom (17b) vom Kanal (7) für den Entlüftungs-Luftstrom (17a) trennenden Ebene (6) im Gehäuse (2) bis zu einer Scheitelkante des Wärmeübertragers (14) hochgeführt ist,
daß die Auslaß-Kammer (12) nach oben durch eine Abschlußwand (19) begrenzt ist, die sich an eine andere Scheitelkante des Wärmeübetragers (14) anschließt,
daß die Auslaß-Kammer (12) mittels der Wände (18 und 19) Verbindung mit ersten Durchströmkanälen (16a) des Wärmeübertragers (14) hat, an die wiederum eine Kammer (25) anschließt, in welcher sich die Abluftöffnung (31) zum Raum befindet,
daß die Kammer (25) durch eine Blechwand (24) von einer weiteren Kammer (23) abgetrennt ist, die durch einen Filter (20) mit der am Kanal (8) anliegenden Einlaß-Kammer (13) korrespondiert,
daß an die Kammer (23) der Wärmeübertrager (14) mit seinen zweiten Durchströmkanälen (16b) anschließt, welche über eine weitere Kammer (33) mit der raumseitigen Zuluftöffnung (34) in der Frontwand (32) in Verbindung stehen,
und daß das Gebläserad (27) des Radialgebläses (28) einen Durchbruch (26) in der Blechwand (24) durchsetzt sowie Fluchtlage mit der Abluftöffnung (31) der Frontwand (32) hat, wobei es mit seiner einen Hälfte (30a) in der dem Filter (20) benachbarten Kammer (23) aufgenommen ist, während seine andere Hälfte (30b) in der mit der Abluftöffnung (31) versehenen Kammer (25) liegt, daß dabei vorzugsweise die Strömungskanäle (7 und 8) in einer rohrförmigen Auskleidung (5) eines Wanddurchbruchs (4) durch eine Trennwand (6) mit etwa gleichem Querschnitt gegeneinander abgegrenzt sind, daß an diese Strömungskanäle (7 und 8) zwei Durchlässe (10 und 11) der Rückwand (9) des Gehäuses (2) anschließbar sind, wobei der eine Durchlaß (10) in die Kammer (12) und der andere Durchlaß (11) in die Kammer (13)mündet, daß vorteilhafterweise der Wärmeübertrager (14) ein rekuperativ arbeitender Wärmeübertrager von Kreuzstrom-Bauart ist und einen Stapel aus einer größeren Anzahl Einzellamellen bzw. -platten (15a und 15b) aufweist, und daß zweckmäßigerweise als Filter ein plattenförmiger Filtereinsatz (20) vorgesehen sowie zwischen zwei Gruppen von stabförmigen Haltegliedern (21a und 21b) ausgerichtet ist, wobei der Filtereinsatz (20) durch eine Wandöffnung (22) des Gehäuses (2) aus- und einbaubar ist.

3. Lüftungsvorrichtung nach Anspruch 1,
dadurch gekennzeichnet,
daß der Umlenkbogen (69, 62) im Strömungsweg für den Entlüftungs-Medienstrom (67a) einen Winkel zwischen 120°und 180°, z.B. von 150°, einschließt.

4. Lüftungsvorrichtung nach einem der Ansprüche 1, 2 und 3,
dadurch gekennzeichnet,
daß der Durchströmquerschnitt des Strömungsweges für den Entlüftungs-Medienstrom (67a) strömungsabwärts des Wärmeübertragers (64) und der Strömungsumlenkung (69)wenigstens bereichsweise (62) kleiner bemessen ist als der Durchströmungsquerschnitt (66a) des Wärmeübertragers (64) und des dessen Eintrittsseite vorgelagerten Abschnittes (76) des Strömungsweges.

5. Lüftungsvorrichtung nach einem der Ansprüche 1 bis 4,
dadurch gekennzeichnet,
daß die Durchtrittsfläche der Einlaßöffnung (97) für den Entlüftungs-Medienstrom (67a) größer bemessen ist als die Durchtrittsfläche der Auslaßöffnung (60) hierfür.

6. Lüftungsvorrichtung, nach einem der Ansprüche 1 bis 5,
dadurch gekennzeichnet,
daß die beiden Strömungswege von den Einlaßöffnungen (97 bzw. 61) aus zumindest bis zum Wärmeübertrager (64) hin in aufsteigender Richtung durch das Gehäuse (52) geführt sind,
daß der Wärmeübertrager (64) in beiden Strömungswegen oberhalb des Radialgebläses (93) angeordnet ist,
und daß zumindest im Strömungsweg für den Entlüftungs-Luftstrom (67a) der Wärmeübertrager (64) dessen geodätisch höchste Stelle (126) bildet.

7. Lüftungsvorrichtung nach einem der Ansprüche 1 bis 6,
dadurch gekennzeichnet,
daß der Strömungsweg für den Belüftungs-Medienstrom (67b) von der Austrittsseite des Wärmeübertragers (64) zur Zuluft- bzw. Auslaßöffnung (99) einen Umlenkbogen aufweist, der einen Winkel von weniger als 90°, z.B. zwischen 0° und 60° einschließt.

8. Lüftungsvorrichtung nach einem der Ansprüche 1 bis 7,
dadurch gekennzeichnet,
daß die Ebenen der Einlaßöffnungen (11 und 31 bzw. 61 und 97) des Gehäuses (2 bzw. 52) zu den Ebenen der Einlaßseiten der Gebläserad-Hälften (30a und 30b bzw. 95a und 95b) parallel liegen (Fig. 7) oder hierzu spitzwinklig geneigt verlaufen (Fig. 1) und daß dabei zumindest die die Gebläserad-Hälften (30a und 30b bzw. 95a und 95b) enhaltenden Längenabschnitte (23 und 25 bzw. 75 und 76) der Strömungswege sich jeweils parallel zur Rotationsebene der Gebläserad-Hälften (30a und 30b bzw. 95a und 95b) erstrecken, wobei vorteilhaft die Einlaßseite der dem Entlüftungs-Medienstrom (17a bzw. 67a) zugeordneten Gebläserad-Hälfte (30b bzw. 95a) sich im wesentlichen vollständig mit der zugehörigen Einlaßöffnung (31 bzw. 97) des Gehäuses (2 bzw. 52) in Deckungslage befindet, während die Einlaßseite der dem Belüftungs-Medienstrom (17b bzw. 67b) zugeordneten Gebläserad-Hälfte (30a bzw. 95b) nur teilweise von der zugehörigen Einlaßöffnung (11 bzw. 61) des Gehäuses (2 bzw. 52) überdeckt ist (Fig. 7 und 1), und wobei zweckmäßigerweise die Einlaßöffnung (11 bzw. 61) für den Belüftungs-Medienstrom (17b bzw. 67b) und die Auslaßöffnung (10 bzw. 60) für den Entlüftungs-Medienstrom (67a) in der Rückwand (9 bzw. 59) des Gehäuses (2 bzw. 52) unmittelbar übereinanderliegen und lediglich durch einen Quersteg (z.B. 84) voneinander getrennt sind, wobei jede dieser Öffnungen (10 bzw. 60 und 11 bzw. 61) gegenüber dem Quersteg (84) vorzugsweise eine Halbkreisfläche begrenzt und an ein entsprechend längsgeteiltes (6 bzw. 56) Kanalrohr (56 bzw. 55), Wandfutter od. dgl. anschließbar ist (Fig. 7 bzw. 1).

9. Lüftungsvorrichtung nach einem der Ansprüche 1 bis 8,
dadurch gekennzeichnet,
daß zumindest zwischen der Einlaßöffnung (11 bzw. 61) für den Belüftungs-Medienstrom (17b bzw 67b) und der Einlaßseite der zugehörigen Gebläserad-Hälfte (30a bzw. 95b) ein Filter (20 bzw. 70) angeordnet ist (Fig. 7 bzw. 1), daß vorzugsweise aber auch zwischen der Einlaßöffnung (97) für den Entlüftungs-Luftstrom (67a) und der Einlaßseite der zugehörigen Gebläserad-Hälfte (95a) ein Filter (100) vorgesehen ist (Fig. 1), und daß dann beide Filter (70 und 100) von einer vorzugsweise einstückigen Filtermatte gebildet sind, die zwischen drei sich jeweils im Winkel zueinander erstreckenden Gehäusewänden (59, 102b, 98) um den das Gebläserad (92) mit seinen beiden Hälften (95a, 95b) einschließenden Abschnitt eines die beiden Strömungswege (75, 76) enthaltenden Luftführungs-Baukörper (74) herumlegbar ist (Fig. 1).

10. Lüftungsvorrichtung nach Anspruch 9,
dadurch gekennzeichnet,
daß der Aufnahmeraum (71) für die Filtermatte (70, 100) von der Frontwand (98) entlang einer Querwand (102b) zur Rückwand (59) des Gehäuses (52) verläuft und dabei mindestens von der Querwand (102b) zur Rückwand (59) hin mit bogenförmig verlaufenden Führungselementen (Rippen 72) versehen ist, wobei vorzugsweise die Einbaulage der Filtermatte (70, 100) durch Klemmflächen und/oder Eingriffszungen bzw. -stifte (128) fixierbar ist, die zumindest zwischen der Frontwand (98) des Gehäuses (52) und den benachbarten Begrenzungswänden (78) des die Strömungswege (75, 76) umschließenden Luftführungsbaukörper (74) ausgebildet sind (Fig. 1).

11. Lüftungsvorrichtung nach einem der Ansprüche 1 bis 10,
dadurch gekennzeichnet,
daß die Rückwand (59) und die, z.B. vier, Querwände (101a, 101b, 102a, 102b) des Gehäuses (52) ein einstückiges Formteil, beispielsweise aus Kunststoff-Spritzguß, bilden, das durch eine abnehmbare Frontwand (98) verschließbar ist, sowie den die Strömungswege (75, 76) bildenden Luftführungs-Baukörper (74), das Radialgebläse (93) und den Wärmeübertrager (64) aufnimmt (Fig. 1).

12. Lüftungsvorrichtung nach einem der Ansprüche 1 bis 11,
dadurch gekennzeichnet,
daß der Wärmeübertrager (14 bzw. 64) Kreuzstrom-Bauart aufweist und von einem einzelnen Platten- bzw. Lamellenpaket, z.B. aus dünnem, wärmeleitendem Schichtwerkstoff, wie Leichtmetall- oder Kupferblech, gebildet ist und - vorzugsweise - auch die Wände (73, 77, 78, 79, 80) des die Strömungswege (75, 76) eingrenzenden Luftführungs-Baukörpers (74) aus einem solchen wärmeleitenden Schichtwerkstoff bestehen, wobei zweckmäßigerweise zwei sich diagonal gegenüberliegende Ecken des Platten- bzw. Lamellenpaketes zwischen zwei Winkelzargen (82, 83) des die beiden Strömungswege (75, 76) eingrenzenden Luftführungs-Baukörper (74) eingespannt, z.B. verrastet, sind, während die beiden anderen, sich diagonal gegenüberliegenden Ecken desselben an Stütz- und/oder Ausrichtanschlägen des Luftführungs-Baukörpers (74) bzw. des Gehäuses (52) anliegen (Fig.1).

13. Lüftungsvorrichtung nach einem der Ansprüche 1 bis 12,
dadurch gekennzeichnet,
daß der die beiden Strömungswege (75, 76) eingrenzende Luftführungs-Baukörper (74) an seinem dem Wärmeübertrager (64) abgewendeten Ende mit einer Hohlkammer (120) versehen ist bzw. in Verbindung steht, in der elektrische und/oder elektronische Schalt- und/oder Steuerglieder (121, 122), z.B. Thermoschalter und/oder Hygroschalter, unterbringbar sind, wobei vorzugsweise in der Hohlkammer (120) auch mindestens ein elektrischer Hauptschalter (122) sitzt, der mit einem Druckknopf mittelbar oder unmittelbar an der Rückseite eines - z.B. auch elastisch verformbar ausgebildeten - Teilabschnitts (123) der Frontwand (98) des Gehäuses (52) anliegen kann.

14. Lüftungsvorrichtung (51) zum gleichzeitigen Be- und Entlüften von Räumen, insbesondere zur Wärmerückgewinnung aus dem Entlüftungs-Medienstrom (67b) mit einem quaderförmigen Gehäuse (52), das - beispielsweise rauminnenseitig - an oder in einer Gebäudewand (53) anzuordnen sowie an je einen zur Außenluft führenden Kanal (57, 58) für den Belüftungs- und den Entlüftungs-Medienstrom (67b bzw 67a) anschließbar ist, wobei innerhalb des Gehäuses (52) zwei voneinander getrennte Strömungswege ausgebildet sind, die je eine Einlaßöffnung (61 bzw. 97) und eine Auslaßöffnung (60 bzw. 90) für den Belüftungs- und den Entlüftungs-Medienstrom (67b bzw 67a) aufweisen, wobei weiterhin die Einlaßöffnung (61 bzw. 97), beider Strömungswege in sich gegenüberliegenden Wänden (98 und 59), nämlich in der Frontwand (98) und in der Rückwand (59), des Gehäuses (52) angeordnet sind, und wobei die Einlaßöffnung (97) in der Frontwand (98), die Abluftöffnung bildet, während die Zuluftöffnung (99) für den Belüftungs-Medienstrom (67b) im Abstand von dieser Abluftöffnung ebenfalls in der Frontwand (98) vorgesehen ist, nach einem der Ansprüche 1 und 3 bis 12,
dadurch gekennzeichnet,
daß die Frontwand (98) eine Verrippung (103) aufweist, die schräg zu ihren Begrenzungskanten (104a, 104b, 105a, 105b) verläuft, daß dabei die Verrippung (103) jeweils mindestens im Bereich der Abluftöffnung (97) und der Zuluftöffnung (99) durchbrochen ist, daß zweckmäßigerweise jede Rippe (103a, 103b) der Verrippung (103) einen zur Hauptebene der Frontwand (98) parallel liegenden Profilabschnitt (106a, 106b), einen zur Hauptebene im wesentlichen normal verlaufenden Profilabschnitt (107a, 107b) sowie einen gegenüber dieser Hauptebene geneigt verlaufenden Übergangs-Abschnitt (108a, 108b) aufweist, und die Durchbrechungen sich lediglich in den im wesentlichen normal zur Hauptebene der Frontwand (98) verlaufenden Profilabschnitten (107a, 107b) befinden, wobei vorteilhaft die Neigungsrichtung der Übergangs-Profilabschnitte (108a) im Bereich der Abluftöffnung (97) spiegelbildlich zur Neigungsrichtung der Übergangs-Profilabschnitte (108b) im Bereich der Zuluftöffnung (99) vorgesehen ist, insbesondere die Übergangs-Profilabschnitte (108a) im Bereich der Abluftöffnung (97) eine schräg nach abwärts und vorne gerichtete Lage haben, währen sie (108b) im Bereich der Zuluftöffnung (99) schräg nach aufwärts und vorne gerichtet sind, und mit Vorteil an der Rückseite der Frontwand (98) zumindest im Bereich von Abluftöffnung (97) und Zuluftöffnung (99) Versteifungsstege (110) angeformt sind, die sich im wesentlichen quer zum Richtungsverlauf der Verrippung (103) erstrecken und deren Rippen (103a, 103b) im bereich der Durchbrechungen untereinander verbinden.

15. Lüftungsvorrichtung nach einem der Ansprüche 1 bis 14,
dadurch gekennzeichnet,
daß das Radialgebläse (93) mit gegenüber der Horizontalen geneigt angeordneter Drehachse (96) in dem die Strömungswege (75, 76) enthaltenden Luftführungs-Baukörper (74) und/oder im Gehäuse (52) gehalten ist, wobei vorzugsweise das Radialgebläse, ein Gebläserad aus schlecht wärmeleitendem Material, beispielsweise Kunststoff, aufweist, dessen im wesentlichen radiale Trennwand (94) zwischen den beiden Gebläserad-Hälften (95a, 95b) im Bereich zwischen ihrer Lagernabe (115) und dem Schaufelkranz (113) mit Durchbrechungen (114) versehen ist, die mindestens zum größten Teil von einer dünnen Schicht (117) aus gut wärmeleitendem Werkstoff, beispielsweise Metallfolie, überdeckt sind.

## Claims

1. A ventilator (51) for the simultaneous intake of air into and exhausting of air from rooms and for heat recovery from the exhaust media flow (67a), the ventilator having a shallow oblong casing (52) which can be disposed on or in a building wall (53), for example, on the inside of the room, and connected to respective channels (57, 58) leading to the outside air for the intake and exhaust media flows (67b, 67a respectively), two separate flow paths being present in the casing (52) and each being formed with an entry aperture (61, 97 respectively) and an exit aperture (60, 99 respectively) and having a heat exchanger (64) therebetween for the respective intake and exhaust media flow (67b, 67a respectively), the respective entry apertures (61, 97) of the two flow paths being disposed in opposite walls (98, 59), e.g. in the front wall (98) and rear wall (59), of the casing (52), a radial flow fan (93) which has a rotor (92) divided by a radial partition (94) into two independently conveying halves (95a, 95b respectively) being provided inside the casing (52) for forced-flow conveyance of the media in the two flow paths, the rotor (92) extending in each case by way of one of its halves (95a, 95b respectively) into the two flow paths at a place adjacent at least to some extent to the respective entry apertures (61, 97), the entry aperture (97) in the wall (98), e.g. the front wall (98) facing the room side serving as room outlet while the room inlet (99) for the intake media flow (67) is also disposed, at a distance from the room outlet, in a wall (98), e.g., the front wall (98), facing the room side,
characterised in that
the flow path for the exhaust media flow (67a) is longer than the flow path for the intake media flow (67b) and a flow deflection (69, 62) which includes an arc of at least 90° is disposed in the flow path for the exhaust medium flow (67a) on the exit side of the heat exchanger (64).

2. A ventilator (1) for the simultaneous intake of air into and exhausting of air from rooms and for heat recovery from the exhaust media flow (17a), the ventilator having a shallow oblong casing (2) which can be disposed on or in a building wall (3), for example, on the inside of the room, and connected to respective channels (8, 7) leading to the outside air for the intake and exhaust media flows (17b, 17a respectively), two separate flow paths being present in the casing (2) and each being formed with an entry aperture (11, 31 respectively) and an exit aperture (10, 34 respectively) and having a heat exchanger (14) therebetween for the respective intake and exhaust media flow (17b, 77a respectively), the respective entry apertures (11, 31) of the two flow paths being disposed in the front wall (32) and rear wall (9) of the casing (2), a radial flow fan (28) which has a rotor (27) divided by a radial partition (24) into two independently conveying halves (30a, 30b respectively) being provided inside the casing (2) for forced-flow conveyance of air in the two flow paths, the rotor (27) extending in each case by way of one of its halves (30a, 30b respectively) into the two flow paths at a place adjacent at least to some extent to the respective entry apertures (11, 31), the entry aperture (31) in the front wall (32) facing the room side serving as room outlet while the room inlet for the intake media flow (17b) is also disposed, at a distance from the room outlet, in the front wall (32), facing the room side,
characterised in that
in the casing (2) an entry chamber (13) is associated with the intake flow channel (8) and an exit chamber (12) is associated with the exhaust flow channel (7),
the chambers (12, 13) are separated from one another by a thin metal partition (18) which rises from a plane (6) in the casing (2), such plane separating the intake low channel (8) from the exhaust flow channel (7), as far as an apex edge of the heat exchanger (14),
the exit chamber (12) is bounded at the top by a closure wall (19) which extends to another apex edge of the heat exchanger (14),
through the agency of the walls (18 and 19) the exit chamber (12) communicates with first flow channels (16a) of the heat exchanger (14) and a chamber (25) having the room outlet (31) is connected to the latter channels,
the chamber (25) is separated by a metal partition (24) from another chamber (23) which corresponds through a filter (20) with the entry chamber (13) associated with the channel (8),
the heat exchanger (14) is connected to the chamber (23) by way of its second flow channels (16b) which communicate by way of another chamber (33) with the room inlet (34) in the front wall (32),
and the rotor (27) of the radial fan (28) extends through an aperture (26) in the wall (24) and is in alignment with the room outlet (31) in the front wall (32), one half (30a) of the rotor being received in the chamber (23) adjacent the filter (20) while the other rotor half (30b) is disposed in the chamber (25) in which the room outlet (31) is disposed, the flow channels (7, 8) are preferably separated from one another in a tubular lining (5) of an aperture (4) in the wall by a partition (6) so as to have substantially the same cross-section as one another, and two passages (10, 11) in the back wall (9) of the casing (2) can be connected to the latter channels (7, 8), one passage (10) extending into the chamber (12) and the other passage (11) into the chamber (13),
the heat exchanger (14) is, advantageously, a recuperative cross-flow heat exchanger and has a stack consisting of a large number of discrete lamellae or plates (15a, 15b),
and, conveniently, a plate-like filter insert (20) is provided as filter and is aligned between two groups of rod-like retaining members (21a, 21b), the filter insert (20) being adapted to be assembled and demounted through an aperture (22) in the casing wall.

3. A ventilator according to claim 1,
characterised in that
the deflecting arc (69, 62) in the flow path for the exhaust flow (67a) includes an angle between 120° and 180°, e.g., 150°.

4. A ventilator according to any of claims 1, 2 and 3,
characterised in that
the flow cross-section of the flow path for the exhaust medium flow (67a) is downstream of the heat exchanger (64) and flow deflection (69) smaller at least in zones (62) than the flow cross-section (66a) of the heat exchanger (64) and of that part (76) of the flow path which precedes the entry side of the heat exchanger (64).

5. A ventilator according to any of claims 1 to 4,
characterised in that
the passage area of the entry aperture (97) for the exhaust media flow (67a) is larger than the passage area of the exit aperture (60).

6. A ventilator according to any of claims 1 to 5,
characterised in that
the two flow paths extend in a rising direction through the casing (52) from the entry apertures (97, 61 respectively) at least as far as the heat exchanger (64),
the heat exchanger (64) is disposed in the two flow paths above the radial flow fan (93),
and the heat exchanger (64) forms the geodetically highest place (126) at least in the flow path for the exhaust flow (67a).

7. A ventilator according to any of claims 1 to 6,
characterised in that
the flow path for the intake flow (67b) from the exit side of the heat exchanger (64) to the room inlet (99) has a deflecting arc which includes an angle of less than 90°, e.g. between 0° and 60°.

8. A ventilator according to any of claims 1 to 7,
characterised in that
the planes of the entry apertures (11, 31; 61, 97 respectively) of the casing (2, 52 respectively) extend parallel (Fig. 7) or at an acute angle (Fig. 1) to the planes of the entry sides of the rotor halves (30a, 30b; 95a, 95b respectively),
at least the flow path longitudinal portions (23, 25; 75, 76 respectively) which contain the rotor halves (30a, 30b; 95a, 95b respectively) extend parallel to the plane of rotation of such halves;
the entry side of the rotor half (30b, 95a respectively) associated with the exhaust flow (17a, 67a respectively) is, advantageously, disposed in substantially complete registration with the associated entry aperture (31, 97 respectively) of the casing (2, 52 respectively) while the entry side of the rotor half (30a, 95b respectively) associated with the intake flow (17b, 67b respectively) is covered only to some extent by the associated entry aperture (11, 61 respectively) of the casing (2, 52 respectively) (Figs. 7 and 1),
the entry aperture (11, 61 respectively) for the intake flow (17b, 67b respectively) and the exit aperture (10, 60 respectively) for the exhaust flow (67a) are, conveniently, disposed directly one above another in the casing rear wall (9, 59 respectively) and are separated from one another only by a cross-web (e.g. 84),
and each of these apertures (10, 60; 11, 61 respectively) preferably bounds a semicircular area relatively to the cross-web (84) and can be connected to a correspondingly longitudinally divided (6, 56 respectively) channel tube (56, 55 respectively) wall lining or the like (Figs. 7 and 1 respectively).

9. A ventilator according to any of claims 1 to 8,
characterised in that
a filter (20, 70 respectively) is disposed at least between the entry aperture (11, 61 respectively) for the intake flow (17b, 67b respectively) and the entry side of the associated rotor half (30a, 95b respectively) (Figs. 7 and 1 respectively),
a filter (100) is preferably also provided between the entry aperture (97) for the exhaust flow (67a) and the entry side of the associated rotor half (95a) (Fig. 1),
and both filters (70, 100) are embodied by a preferably unitary filter mat which can be placed between three casing walls (59, 102b, 98) disposed at an angle to one another around such part of an air flow guide (74) containing the two flow paths (75, 26) as extends around both rotor halves (95a, 95b) (Fig. 1).

10. A ventilator according to claim 9,
characterised in that
the chamber (71) receiving the filter mat (70, 100) extends from the front wall (98) along a cross-wall (102b) to the back wall (59) of the casing (52) and has at least from the cross-wall (102b) to the back wall (59) arcuate guide elements (ribs 72),
and the assembly position of the filter mat (70, 100) is fixable preferably by clamping surfaces and/or locking tongues or pins (128) devised at least between the casing front wall (98) and the adjacent boundary walls (78) of the air flow guide (74) forming the flow paths (75, 76) (Fig. 1).

11. A ventilator according to any of claims 1 to 10,
characterised in that
the back wall (59) and the e.g. four cross-walls (101a, 101b, 102a, 102b) of the casing (52) are a single moulding, e.g. a plastics injection moulding, which is closable by a removable front wall (98) and which receives the air flow guide (74) forming the flow paths (75, 76), fan (93) and heat exchanger (64) (Fig. 1).

12. A ventilator according to any of claims 1 to 11,
characterised in that
the heat exchanger (14, 64 respectively) is of the cross-flow kind and is embodied by a single group of plates or lamellae, e.g. of a thin heat-conducting laminated substance such as light metal or copper sheet,
the walls (73, 77, 78, 79, 80) of the air flow guide (74) bounding the flow paths (75, 76) are preferably made of a similar heat-conducting substance,
and, conveniently, two diagonally opposite corners of the group of plates or lamellae are engaged, for example, by catching, between two angled support members (82, 83) of the air flow guide (74) bounding the flow paths (75, 76) while the other two diagonally opposite corners of the group engage supporting and/or aligning abutments of the air flow guide (74) or casing (52) respectively (Fig. 1).

13. A ventilator according to any of claims 1 to 12,
characterised in that
at its end remote from the heat exchanger (64) the air flow guide (74) bounding the flow paths (75, 76) has, or it is in communication with, a hollow chamber (120) adapted to receive electrical and/or electronic switching and/or control elements (121, 122), e.g. thermoswitches and/or hygroswitches,
and there is preferably also present in the hollow chamber (120) at least one main electrical switch (122) which can engage indirectly by way of a press button or directly with the back of an e.g. resiliently deformable portion (123) of the casing front wall (98).

14. A ventilator (51) for the simultaneous intake of air into rooms and exhausting of air from rooms, more particularly for heat recovery from the exhaust medium flow (67b), the ventilator having a shallow oblong casing (52) which can be disposed, for example, on the inside of the room, on or in a building wall (53) and connected to respective channels (57, 58) leading to the outside air for the intake and exhaust medium flows (67b, 67a respectively), there being present in the casing (52) two separate flow paths each formed with an entry aperture (61, 97 respectively) and an exit aperture (60, 90 respectively) for the respective intake and exhaust medium flows (67b, 67a), the entry apertures (61, 97) of the two flow paths being disposed in opposite walls (98, 59), viz. in the front wall (98) and back wall (59) of the casing (52), the entry aperture (97) in the front wall (98) serving as room outlet while the room inlet (99) for the intake flow (67b) is also disposed in the front wall (98) at a distance from the room outlet, according to any of claims 1 and 3 to 12,
characterised in that
the front wall (98) has ribbing (103) which extends at an inclination to its boundary edges (104a, 104b, 105a, 105b) and the ribbing (103) is apertured at least near the room outlet (97) and the room inlet (99);
conveniently, each rib (103a, 103b) of the ribbing (103) has a profiled part (106a, 106b) parallel to the main plane of the front wall (98), a profiled part (107a, 107b) extending substantially perpendicularly to the main plane and a transition part (108a, 108b) which extends at an inclination to the latter main plane and the apertures are disposed only in the profiled parts (107a, 107b) extending substantially perpendicularly to the front wall main plane;
advantageously, the direction of inclination of the transition profiled parts (108a) near the room outlet (97) is laterally inverted with respect to the direction of inclination of the transition profiled parts (108b) near the room inlet (99);
more particularly the transition profiled parts (108a) near the room outlet (97) are in a downwardly inclined and forwardly directed position while the profiled parts (108b) near the room inlet (99) extend inclinedly upwards and forwards;
and, advantageously, reinforcing webs (110) are formed on the back of the front wall (98) at least near the room outlet (97) and room inlet (99), extend substantially transversely to the direction of the ribbing (103) and interconnect the ribs (103a, 103b) thereof near the apertures.

15. A ventilator according to any of claims 1 to 14,
characterised in that
the radial fan (93) is retained with its rotational axis (96) at an inclination to the horizontal in the air flow guide (74) containing the flow paths (75, 76) and/or in the casing (52),
and the radial flow fan preferably has a rotor made of a material such as plastics which is a poor heat conductor, the substantially radial partition (94) of the rotor between its two halves (95a, 95b) having in the zone between its hub (115) and blading (113), apertures (114) covered at least to a large extent by a thin layer (117) of a material such as metal foil which is a good heat conductor.

## Revendications

1. Un dispositif d'aération (51) destiné à aérer et désaérer simultanément des locaux et, en particulier, à récupérer de la chaleur d'un flux de matière de désaération (67a) et doté d'un boîtier (52) parallélipipédique qui peut s'installer, par exemple du côté situé à l'intérieur du local, sur ou dans un mur de bâtiment (53) et peut être raccordé à deux conduits (57, 58) aboutissant à l'air extérieur et destinés respectivement au flux de matière d'aération 67b et de désaération 67a; dans ce dispositif : deux itinéraires séparés de flux ont été réalisés au sein du boîtier (52), qui présentent chacun un orifice d'admission (respectivement 61 et 97) et un orifice d'échappement (respectivement 60 et 99) ainsi que, entre ces derniers, un échangeur thermique (64) pour le flux de matière d'aération et de désaération (67a et 67b); les orifices d'admission (61 ou 97) des deux itinéraires de flux sont disposés dans des parois opposées (98 et 59) du boîtier (52), par exemple dans sa paroi antérieure (98) et sa paroi postérieure (59); en outre, pour la progression forcée de la matière d'aération dans les deux itinéraires de flux au sein du boîtier (52), on a prévu un ventilateur radial (93) dont la roue (92) est divisée par une paroi de séparation radiale (94) en deux moitiés (95a et 95b) pulsant l'air de manière indépendante et qui fait saillie par chacune de ces moitiés (95a et 95b) dans les deux itinéraires de flux à un emplacement qui jouxte ait moins partiellement les orifices d'admission (61 ou 97); l'orifice d'admission (97) situé dans une paroi (98) orientée du côté du local, par exemple la paroi antérieure (98), forme l'orifice d'évacuation d'air, tandis que l'orifice d'adduction d'air (99) destinée au flux de matière d'aération (67b) est prévu à l'écart de cet orifice d'évacuation d'air mais également sur une paroi (98) orientée vers l'intérieur du local, par exemple la paroi antérieure (98),
ce dispositif étant caractérisé
par le fait que l'itinéraire de flux de la matière de désaération (67a) a été doté de dimensions plus importantes que l'itinéraire du flux de la matière d'aération (67b)
et par le fait qu'il a été prévu sur l'itinéraire du flux de matière de désaération (67a), du côté de la sortie de l'échangeur thermique (64) une courbure de flux (69, 62) qui comprend un arc de 90 degrés.

2. Un dispositif d'aération (1) destiné à aérer et désaérer simultanément des locaux et à récupérer de la chaleur d'un flux de matière de désaération (17a) et doté d'un boîtier (2) parallélipipédique qui peut s'installer, par exemple du côté situé à l'intérieur du local, sur ou dans un mur de bâtiment (3) et peut être raccordé à deux conduits (7, 8) aboutissant à l'air extérieur et destinés respectivement au flux de matière d'aération 17b et de désaération 17a; dans ce dispositif : deux itinéraires séparés de flux ont été réalisés au sein du boîtier (2), qui présentent chacun un orifice d'admission (respectivement 11 et 31) et un orifice d'échappement (respectivement 10 et 34) ainsi que, entre ces derniers, un échangeur thermique (14) pour le flux de matière d'aération et de désaération (17a et 17b); les orifices d'admission (11 ou 31) des deux itinéraires de flux sont disposés dans la paroi antérieure (32) et la paroi postérieure (9) du boîtier (2); en outre, pour la progression forcée de la matière d'aération dans les deux itinéraires de flux au sein du boîtier (2), on a prévu un ventilateur radial (28) dont la roue (27) est divisée par une paroi de séparation radiale (24) en deux moitiés (30a et 30b) pulsant l'air de manière indépendante et qui fait saillie par chacune de ces moitiés (30a et 30b) dans les deux itinéraires de flux à un emplacement qui jouxte au moins partiellement les orifices d'admission (11 ou 31); l'orifice d'admission (31) situé dans la paroi antérieure (32) orientée du côté du local forme l'orifice d'évacuation d'air, tandis que l'orifice d'adduction d'air destinée au flux de matière d'aération (17b) est prévu à l'écart de cet orifice d'évacuation d'air mais également sur la paroi antérieure (32) orientée vers l'intérieur du local,
ce dispositif étant caractérisé
par le fait qu'à l'intérieur du boîtier (2), une chambre d'admission (13) est adjointe au conduit (8) pour le flux d'aération (17b) et une chambre d'échappement (12) au conduit (7) pour le flux de désaération (17a);
par le fait que les chambres (12 et 13) sont séparées l'une de l'autre par une mince paroi de tôle (18) qui est prolongée vers le haut jusqu'à une arête du sommet de l'échangeur thermique (14) par un plan (6) séparant le conduit (8) de flux d'air d'aération (17b) du conduit (7) de flux d'air de désaération (17a);
par le fait que la chambre d'échappement (12) est limitée dans sa partie supérieure par une paroi de fermeture (19) qui se raccorde à une autre arête du sommet de l'échangeur thermique (14);
par les fait que, grâce aux parois (18 et 19), la chambre d'échappement (12) est reliée aux premiers conduits de parcours de flux (16a) de l'échangeur thermique (14), auxquels se rattache par ailleurs une chambre (25) dans laquelle se trouve l'orifice d'évacuation d'air (31) du côté du local;
par le fait que la chambre (25) est séparée par une paroi de tôle (24) d'une autre chambre (23), qu'un filtre (20) met en communication avec la chambre d'admission (13) située sur le conduit (8);
par le fait qu'a la chambre (23) se rattache l'échangeur thermique (14) avec ses seconds conduits de parcours de flux (16b) qui sont reliés par une autre chambre (33) à l'orifice d'adduction d'air (34) situé du côté de l'intérieur du local, dans la paroi antérieure (32);
et par le fait que la roue (27) du ventilateur radial (28) traverse un percement (26) de la paroi de tôle (24) et a une position située dans l'alignement de l'orifice d'évacuation d'air (31) de la paroi antérieure (32), tout en se logeant par une de ses moitiés (30a) dans la chambre (23) voisine du filtre (20) tandis que son autre moitié (30b) est située dans la chambre (25) dotée de l'orifice d'évacuation d'air (31);
par le fait que dans cette disposition, il est préférable que les conduits de flux (7 et 8) installés dans un revêtement (5) en forme de buse situé dans un percement (4) du mur soient séparés l'un de l'autre en sections à peu près égales par une paroi de séparation (6);
par le fait que deux passages (10 et 11) de la paroi postérieure (9) du boîtier (2) puissent se raccorder à ces conduits de flux (7 et 8), l'un de ces passages, le passage (10), aboutissant dans la chambre (12), tandis que l'autre, le passage (11), débouche sur la chambre (13);
par le fait que l'échangeur thermique (14) est avantageusement constitué par un échangeur thermique à récupération de chaleur, avec une configuration structurelle à flux croisés et présente un empilement d'un nombre assez élevé de lamelles ou plaques individuelles (15a et 15b);
et par le fait qu'il est judicieux de prévoir comme filtre une cartouche filtrante (20) en forme de plaque, qui est disposée entre deux groupes d'éléments d'arrêt (21a et 21b) en forme de tiges et peut s'installer et se retirer par un orifice de la paroi (22) du boîtier (2).

3. Un dispositif d'aération selon la revendication 1,
caractérisé
par le fait que l'arc de courbe (69, 62) dans l'itinéraire de parcours du flux de matière de désaération (67a) comporte un angle compris entre 120 et 180 degrés, s'établissant par exemple à 150 degrés.

4. Un dispositif d'aération selon une des revendications 1, 2 et 3,
caractérisé
par le fait qu'en aval du flux de l'échangeur thermique (64) et de la courbure de flux (69), la section de passage de l'itinéraire de parcours du flux de matière de désaération, présente, au moins localement, des dimensions plus réduites que la section de passage (66a) de l'échangeur thermique (64) et du tronçon (76) de l'itinéraire de passage qui est situé devant le côté d'entrée de cet échangeur thermique (64).

5. Un dispositif d'aération selon une des revendications 1 à 4,
caractérisé
par le fait que la surface de pénétration de l'orifice d'admission (97) pour le flux de matière de désaération possède des dimensions plus importantes que la surface de pénétration de l'orifice d'échappement (60) de ce même flux.

6. Un dispositif d'aération selon une des revendications 1 à 5,
caractérisé
par le fait que les deux itinéraires de flux sont dirigés dans un sens ascendant à l'intérieur du boîtier (52) depuis les orifices d'introduction (97 et 61) jusqu'à l'échangeur thermique (64), par le fait que dans les deux itinéraires de flux, l'échangeur thermique (64) est situé au-dessus du ventilateur radial (93) et par le fait qu'ait moins dans l'itinéraire de parcours du flux d'air de désaération (67a), l'échangeur thermique (64) constitue le point géodésique le plus élevé (126) de ce flux.

7. Un dispositif d'aération selon une des revendications 1 à 6,
caractérisé
par le fait que l'itinéraire de parcours du flux de matière d'aération (67b) présente depuis le côté de la sortie de l'échangeur thermique (64) jusqu'à l'orifice d'adduction ou d'échappement (99) un arc de courbe qui comprend un angle inférieur à 90 degrés et compris, par exemple entre 0 et 60 degrés.

8. Un dispositif d'aération selon une des revendications 1 à 7,
caractérisé
par le fait que par rapport aux plans des côtés d'admission des moitiés (30a et 30b ou 95a et 95b) de roue de ventilateur, les plans des orifices d'admission (11 et 31 ou 61 et 97) du boîtier (2 ou 52) sont en situation parallèle (fig. 7) ou inclinés à angle aigu (fig. 1)
et par le fait que les tronçons longitudinaux (23 et 25 ou 75 et 76) faisant partie des itinéraires de flux et contenant les moitiés (30a et 30b ou 95a et 95b) de roue de ventilateur s'étendent chacun parallèlement au plan de rotation de ces moitiés (30a et 30b ou 95a et 95b) de roue de ventilateur; dans ce dispositif, il est avantageux que le côté d'admission de la moitié (30b ou 95a) de roue de ventilateur adjointe au flux (17a ou 67a) de matière de désaération se trouve quasi complètement en situation de recouvrement par rapport à l'orifice d'admission (31 ou 97) correspondant du boîtier (2 ou 52), tandis que le côté d'admission de la moitié (30a ou 95b) de roue de ventilateur adjointe au flux (17b ou 67b) de matière d'aération n'est que partiellement recouvert par l'orifice d'admission (11 ou 61) correspondant du boîtier (2 ou 52) (fig. 7 et 1); dans ce dispositif, il est également judicieux que l'orifice d'introduction (11 ou 61) du flux de matière d'aération (17b ou 67b) et l'orifice d'échappement (10 ou 60) du flux de matière de désaération (67a) dans la paroi postérieure (9 ou 59) du boîtier (2 ou 52) soient situés directement l'un au-dessus de l'autre et simplement séparés par une traverse (par exemple, 84), chacun de ces orifices (10 ou 60 et 11 ou 61) jouxtant de préférence une surface semi-circulaire face à la traverse (84) et étant susceptibles d'être raccordés à un tuyau de conduit (56 ou 55), revêtement mural, etc. divisé longitudinalement (6 ou 56) (fig. 7 ou 1).

9. Un dispositif d'aération selon une des revendications 1 à 8,
caractérisé
par le fait qu'au moins entre l'ouverture d'admission (11 ou 61) du flux de matière d'aération (17b et 67b) et le côté d'admission de la moitié (30a ou 95b) correspondante de roue de ventilateur est installé un filtre (20 ou 70) (fig. 7 ou 1);
par le fait qu'il est cependant également préférable de prévoir un filtre (100) entre l'orifice d'admission (97) du flux d'air de désaération (67a) et le côté d'admission de la moitié (95a) correspondante de ventilateur; et
par le fait qu'en ce cas, les deux filtres (70 et 100) sont constitués de préférence d'une natte filtrante d'une seule pièce susceptible d'être disposée, d'une part, entre trois parois (59, 102b, 98) du boîtier qui forment des angles entre elles, et, d'autre part, autour du tronçon qui contient la roue (92) de ventilateur avec ses deux moitiés (95a, 95b) et fait partie du corps de conduit d'aération (74) renfermant les deux itinéraires de flux (75, 76) (fig. 1).

10. Un dispositif d'aération selon la revendication 9,
caractérisé
par le fait que l'espace (71) destiné à accueillir la natte filtrante (70, 100) s'étend de la paroi antérieure (98) à la paroi postérieure (59) du boîtier (52), en passant par une paroi transversale (102b) et est doté, au moins de la paroi transversale (102b) à la paroi postérieure (59), d'éléments de guidage (les nervures 72) de configuration arquée; dans ce dispositif, il est préférable que la natte filtrante (70, 100) puisse se fixer en position d'encastrement au moyen de surfaces de serrage et/ou de languettes ou chevilles (128) de contact qui sont prévues au moins entre la paroi antérieure (98) du boîtier (52) et les parois de limitation (78) avoisinantes du corps de conduit d'aération (74) qui entoure les deux itinéraires de flux (75, 76) (fig. 1).

11. Un dispositif d'aération selon une des revendications 1 à 10,
caractérisé
par le fait que la paroi postérieure (59) et les parois transversales, par exemple au nombre de quatre (101a, 101b, 102a, 102b), du boîtier (52) sont réalisées sous la forme d'un élément structurel d'une seule pièce, par exemple en plastique moulé par injection, qui est susceptible d'être fermé par une paroi antérieure (98) amovible et abrite le corps de conduit d'air (74) constituant les itinéraires de flux (75, 76), ainsi que le ventilateur radial (93) et l'échangeur thermique (64) (fig. 1).

12. Un dispositif d'aération selon une des revendications 1 à 11,
caractérisé
par le fait que l'échangeur thermique (14 ou 64) présente une structure à flux croisés et est constitué d'un ensemble de plaques ou lamelles distinctes, faites par exemple d'une matière en feuilles minces et d'une bonne thermoconductibilité, comme de la tôle de métal léger ou de cuivre, tandis que les parois (73, 77, 78, 79, 80) du corps de conduit d'aération (74) qui délimite les itinéraires de flux (75, 76) sont eux aussi composés de préférence d'une matière en feuilles et d'une bonne thermoconductibilité. Dans ce dispositif, il est opportun de serrer, par exemple par emboîtement, deux angles diamétralement opposés de l'empilement de plaques ou de lamelles entre deux cornières (82, 83) du corps de conduit d'aération (74) jouxtant les deux itinéraires de flux (75, 76), tandis que les deux autres angles diamétralement opposés de cet empilement prennent appui sur des butées de support et/ou d'orientation situées sur le corps de conduit d'aération (74) ou le boîtier (52).

13. Un dispositif d'aération selon une des revendications 1 à 12,
caractérisé
par le fait que le corps de conduit d'aération (74) délimitant les deux itinéraires de flux (75, 76) est doté à son extrémité opposée a' l'échangeur thermique (64) d'une chambre creuse (120) - ou y est relié - dans laquelle on peut installer des éléments de commutation et/ou de commande électriques et/ou électroniques (121, 122) tels que des interrupteurs réagissant à la température et/ou à la lumière, cette chambre creuse (120) abritant également de préférence au moins un interrupteur principale électrique (122) qui peut reposer avec un bouton-poussoir directement ou indirectement sur la face postérieure d'un tronçon (123) appartenant à la paroi antérieure (98) du boîtier (52) et fabriqué, par exemple, de manière à pouvoir se déformer en souplesse.

14. Un dispositif d'aération (51) destiné à aérer et désaérer simultanément des locaux et à récupérer de la chaleur d'un flux de matière de désaération (67a) et doté d'un boîtier (52) parallélipipédique qui peut s'installer, par exemple du côté situé à l'intérieur du local, sur ou dans un mur de bâtiment (53) et peut être raccordé à deux conduits (57, 58) aboutissant à l'air extérieur et destinés respectivement au flux de matière d'aération 67b et de désaération 67a; dans ce dispositif : deux itinéraires séparés de flux ont été réalisés au sein du boîtier (52), qui présentent chacun un orifice d'admission (respectivement 61 et 97) et un orifice d'échappement (respectivement 60 et 90) pour le flux de matière d'aération et de désaération (67a et 67b); les orifices d'admission (61 ou 97) des deux itinéraires de flux sont disposés dans des parois opposées (98 et 59) du boîtier (52), par exemple dans sa paroi antérieure (98) et sa paroi postérieure (59); l'orifice d'admission (97) situé dans la paroi antérieure (98), forme l'orifice d'évacuation d'air, tandis que l'orifice d'adduction d'air (99) destinée au flux de matière d'aération (67b) est prévu à l'écart de cet orifice d'évacuation d'air mais également sur la paroi antérieure (98), conformément à l'une des revendications 1 et 3 à 12,
ce dispositif étant caractérisé
par le fait que la paroi antérieures (98) présente une nervuration (103) qui s'étend de biais par rapport aux bords (104a, 104b, 105a, 105b) qui la délimitent,
par le fait qu'en outre, cette nervuration (103) est chaque fois interrompue, au moins dans la zone de l'orifice d'évacuation d'air (97) et de l'orifice d'adduction d'air (99),
par le fait que d'une manière appropriée, chacune de ces nervures (103a, 103b) présente un tronçon de profil (106a, 106b) s'étendant parallèlement au plan principal de la paroi antérieure (98), un tronçon de profil (107a, 107b) s'étendant pour l'essentiel à la perpendiculaire de ce plan et un tronçon de profil de transition (108a, 108b) s'étendant de manière inclinée par rapport à ce plan principal, les interruptions ne se trouvant que dans les tronçons de profil (107a, 107b) s'étendant pour l'essentiel à la perpendiculaire du plan principal de la paroi antérieure (98); dans cette disposition, il est avantageux que le sens d'inclinaison des tronçons de profil de transition (108a) dans la zone de l'orifice d'évacuation d'air (97) soit prévu de manière symétrique au sens d'inclinaison des tronçons de profil de transition (108b) dans la zone de l'orifice d'adduction d'air (99 et que les tronçons de profil de transition (108a) possèdent en particulier dans la zone de l'orifice d'évacuation d'air (97) une position orientée de biais vers le bas et l'avant, tandis que dans la zone de l'orifice d'adduction d'air (99), les tronçons de profit de transition (108b) sont orientés de biais vers le haut et l'avant; par ailleurs, on peut avantageusement disposer sur la face arrière de la paroi antérieure (98), au moins dans la zone des orifices d'évacuation d'air (97) et d'adduction d'air (99), des traverses de raidissement (110) qui s'étendent pour l'essentiel à la perpendiculaire du sens de l'extension de la nervuration (103) et dont les nervures (103a, 103b) se raccordent mutuellement dans la zone des interruptions.

15. Un dispositif selon l'une des revendications 1 à 14,
caractérisé
par le fait que dans le corps de conduit d'aération (74) abritant les itinéraires de flux (75, 76) et/ou dans le boîtier (52), le ventilateur radial (93) est maintenu avec l'axe de rotation (96) disposé obliquement par rapport à l'horizontale et, dans ce dispositif, est doté de préférence d'une roue qui est faite d'une matière peu thermoconductible, par exemple du plastique, et dont la paroi (94), pour l'essentiel radiale, séparant les deux moitiés (95a, 95b) de roue de ventilateur possède dans la zone située entre le moyeu (115) et l'aubage (113) des découpes (114) recouvertes, au moins en majeure partie, d'une mince couche (117) d'une matière d'une bonne thermoconductibilité, par exemple une feuille de métal.
